# EUROPEAN PATENT SPECIFICATION

(11) **EP 3 885 139 B1**
(45) Date of publication and mention of the grant of the patent: **12.07.2023**
(21) Application number: 21162301.2
(22) Date of filing: 12.03.2021
(51) Int. Cl.: B32B 38/14, B29C 63/02, B65H 5/30, B65H 7/02

(54) **SHEET SEPARATION DEVICE, LAMINATOR, IMAGE FORMING APPARATUS, AND IMAGE FORMING SYSTEM**
BLATTTRENNUNGSVORRICHTUNG, LAMINATOR, BILDERZEUGUNGSVORRICHTUNG UND BILDERZEUGUNGSSYSTEM
DISPOSITIF DE SÉPARATION DE FEUILLES, LAMINATEUR, APPAREIL DE FORMATION D'IMAGES ET SYSTÈME DE FORMATION D'IMAGES

(30) Priority: 22.03.2020 JP 2020050393
(43) Date of publication of application: 29.09.2021
(73) Proprietor: Ricoh Company, Ltd., Tokyo 143-8555 (JP)
(72) Inventor: TAKAHASHI, Wataru, Tokyo, 143-8555 (JP); FURUHASHI, Tomohiro, 143-8555, 143-8555 (JP); MONMA, Shinya, Kanagawa, 243-0460 (JP); SUZUKI, Yoshito, Tokyo, 143-8555 (JP); AKIYAMA, Joji, Kanagawa, 243-0460 (JP); HARAGUCHI, Yohsuke, Kanagawa, 243-0460 (JP); ASANO, Sho, Kanagawa, 243-0460 (JP); NOZAKI, Wataru, Kanagawa, 243-0460 (JP)
(74) Representative: J A Kemp LLP

(56) References cited:
- JP-A- 2006 160 429
- US-A1- 2020 338 877
- US-A1- 2020 341 414
- US-B2- 10 857 776

## Description

### BACKGROUND

### Technical Field

This disclosure relates to a sheet separation device configured to separate a two-ply sheet in which two sheets are overlapped and bonded together at a bonding portion of the two-ply sheet, a laminator including the sheet separation device, an image forming apparatus including the sheet separation device, such as a copier, a printer, a facsimile machine, and a multi-functional apparatus having at least two functions of the copier, the printer, and the facsimile machine, and an image forming system including the sheet separation device.

### Related Art

A sheet separation device (i.e. a laminator) separates a two-ply sheet in which two sheets are overlapped and bonded together at a bonding portion of the two-ply sheet (for example, see JP-2006-160429-A). Specifically, the laminator in JP-2006-160429-A includes the sheet separation device that separates two sheets of a laminated sheet that is a two-ply sheet in which one sides of the two sheets are bonded at one end of the two-ply sheet, and inserts protective paper that is an insertion sheet therebetween.

Conventional sheet separation devices are large and expensive because the sheet separation devices use large devices such as two suction devices to separate two sheets constituting a two-ply sheet.

### SUMMARY

This disclosure is made in light of solving the above-described problems, and an object of this disclosure is to provide a sheet separation device, a laminator, an image forming apparatus, and an image forming system, which can preferably and effectively separate two sheets constituting the two-ply sheet without increasing the size of the separation device.

The present disclosure provides a sheet separation device, a laminator, an image forming apparatus, and an image forming system, which can satisfactorily separate ends of the two sheets constituting the two-ply sheet in which two sheets are overlapped and bonded together at one end as a bonding portion of the two-ply sheet without increasing the size of the separation device. In order to achieve this object, there is provided a sheet separation device according to claim 1. Advantageous embodiments are defined by the dependent claims.

Advantageously, the sheet separation device is configured to separate a non-bonding portion of a two-ply sheet in which two sheets are overlapped and bonded together at one end as a bonding portion of the two-ply sheet. The sheet separation device includes a separator configured to be inserted into a gap formed between the two sheets of the two-ply sheet, separate the two sheets, and guide the two sheets in two different directions, respectively.

The present disclosure can provide the sheet separation device, the laminator, the image forming apparatus, and the image forming system, which can preferably and effectively separate the two sheets constituting the two-ply sheet without increasing the size of the separation device.

### BRIEF DESCRIPTION OF THE DRAWINGS

A more complete appreciation of the disclosure and many of the attendant advantages thereof will be readily obtained as the same becomes better understood by reference to the following detailed description when considered in connection with the accompanying drawings, wherein:
FIG. 1 is a schematic view illustrating an overall configuration of a sheet separation device according to an embodiment of the present disclosure;
FIG. 2A is a side view illustrating a gripper that has moved to a gripping position in the sheet separation device illustrated in FIG. 1;
FIG. 2B is a side view illustrating the gripper that has moved to a releasing position in the sheet separation device illustrated in FIG. 1;
FIG. 3A is a perspective view illustrating the gripper that has moved to the gripping position in the sheet separation device illustrated in FIG. 1;
FIG. 3B is a perspective view illustrating the gripper that has moved to the releasing position in the sheet separation device illustrated in FIG. 1;
FIGS. 4A to 4D are schematic views of the main part of the sheet separation device illustrated in FIG. 1, illustrating operations of the sheet separation device;
FIGS. 5A to 5D are schematic views of the main part of the sheet separation device illustrated in FIG. 1, illustrating operations of the sheet separation device, subsequent from the operations of FIGS. 4A to 4D;
FIGS. 6A to 6C are schematic views of the main part of the sheet separation device illustrated in FIG. 1, illustrating operations of the sheet separation device, subsequent from the operations of FIGS. 5A to 5D;
FIGS. 7A to 7C are schematic views of the main part of the sheet separation device illustrated in FIG. 1, illustrating operations of the sheet separation device, subsequent from the operations of FIGS. 6A to 6C;
FIGS. 8A to 8C are schematic views of the main part of the sheet separation device illustrated in FIG. 1, illustrating operations of the sheet separation device, subsequent from the operations of FIGS. 7A to 7C;
FIG. 9 is a schematic view illustrating separation claws inserted into a two-ply sheet in a width direction of the two-ply sheet;
FIGS. 10A to 10E are perspective views illustrating operations of the separation claws;
FIG. 11 including FIGS. 11A and 11B is a flowchart illustrating control performed in the sheet separation device;
FIG. 12 is a schematic view illustrating a configuration of a driving device for the separation claws;
FIG. 13A is a perspective view of the separation claw;
FIG. 13B is a plan view of the separation claw as viewed from the Z direction in FIG. 13A;
FIG. 13C is a rear view of the separation claw as viewed from the Y direction in FIG. 13A;
FIG. 13D is a side view of the separation claw as viewed from the X direction in FIG. 13A;
FIG. 14A is a perspective view of the separation claw according to a first variation;
FIG. 14B is a plan view of the separation claw according to the first variation, as viewed from the Z direction in FIG. 14A;
FIG. 14C is a rear view of the separation claw as viewed from the Y direction in FIG. 14A;
FIG. 14D is a front view of the separation claw according to the first variation as viewed from the - Y direction in FIG. 14A;
FIG. 14E is a side view of the separation claw according to the first variation as viewed from the X direction in FIG. 14A;
FIGS. 15A to 15C are perspective views illustrating operations of the separation claw in FIGS. 14A to 14E;
FIG. 16 is a schematic view illustrating a configuration of a driving device for the separation claws in a second variation;
FIG. 17 is a schematic view illustrating a laminator according to a third variation;
FIG. 18 is a schematic view illustrating an image forming apparatus according to a fourth variation; and
FIG. 19 is a schematic view illustrating an image forming system according to a fifth variation.

The accompanying drawings are intended to depict embodiments of the present disclosure and should not be interpreted to limit the scope thereof. The accompanying drawings are not to be considered as drawn to scale unless explicitly noted. Also, identical or similar reference numerals designate identical or similar components throughout the several views.

### DETAILED DESCRIPTION

In describing embodiments illustrated in the drawings, specific terminology is employed for the sake of clarity. However, the disclosure of this patent specification is not intended to be limited to the specific terminology so selected and it is to be understood that each specific element includes all technical equivalents that operate in a similar manner and achieve similar results.

Referring now to the drawings, embodiments of the present disclosure are described below. As used herein, the singular forms "a," "an," and "the" are intended to include the plural forms as well, unless the context clearly indicates otherwise. Identical reference numerals are assigned to identical components or equivalents and a description of those components is simplified or omitted.

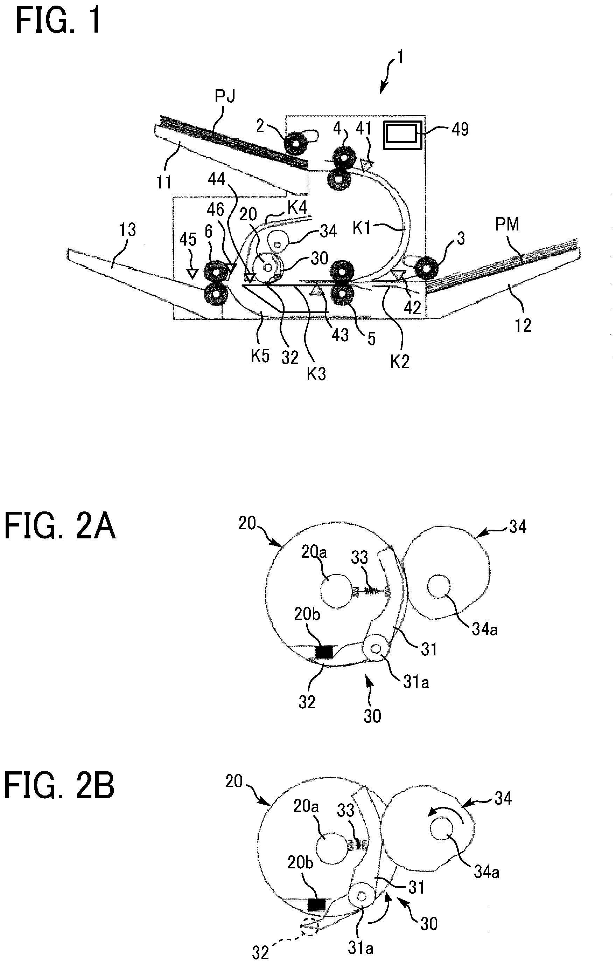

A configuration and operations of a sheet separation device 1 are described below with reference to FIG. 1.

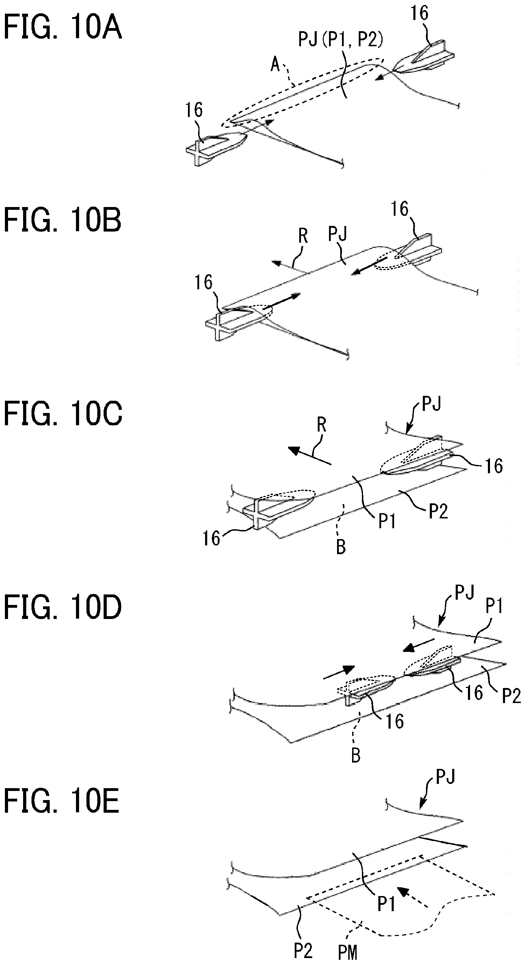

The sheet separation device 1 separates a non-bonding portion of a two-ply sheet PJ in which two sheets P1 and P2 are overlapped and bonded together at one end of the two-ply sheet PJ as a bonding portion A of the two-ply sheet PJ (see FIGS. 10A to 10E and other drawings).

The two-ply sheet PJ in the present embodiment is made of two sheets P1 and P2 overlapped and bonded together at one side of four sides as the bonding portion A. That is, in the two-ply sheet PJ made of two sheets P1 and P2, only one sides of the two sheets P1 and P2 are connected by thermal welding or the like as the bonding portion A, and the other sides of the two sheets P1 and P2 are not connected. As the two sheets P1 and P2 constituting the two-ply sheet PJ, a transparent film sheet (that is, a laminate sheet) may be used.

The sheet separation device 1 separates the two sheets P1 and P2 constituting the tow-ply sheet PJ (i.e. separates the other side of the two sheets that is opposite the bonding portion A that maintains bonding the two sheets P1 and P2). Subsequently, the sheet separation device 1 inserts an insertion sheet PM between the separated two sheets P1 and P2. The insertion sheet PM is a sheet such as one plain sheet or a photograph.

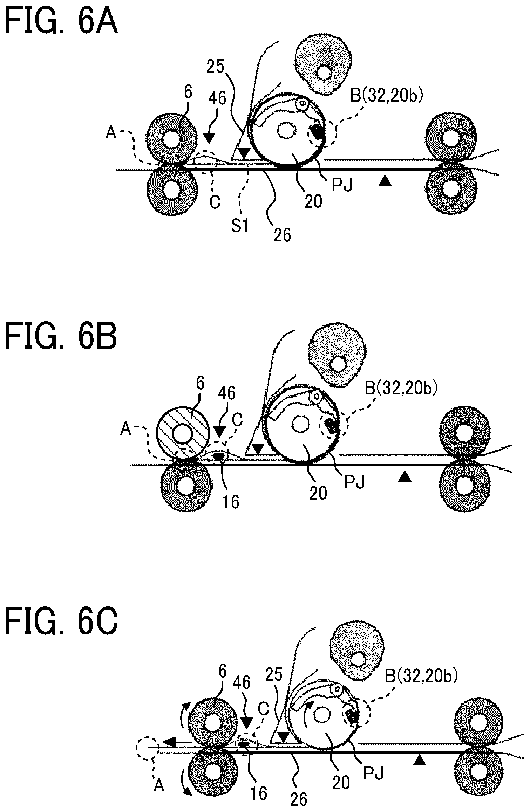

As illustrated in FIG. 1, the sheet separation device 1 includes a first feed tray 11, a second feed tray 12, a first feed roller 2, a second feed roller 3, a first conveyance roller pair 4, a second conveyance roller pair 5, a third conveyance roller pair 6, an ejection tray 13, a first sensor 41, a second sensor 42, a third sensor 43, a fourth sensor 44, a fifth sensor 45, an abnormality detection sensor 46 as an abnormal detection device, a winding roller 20, a moving mechanism 30, and a separation claw 16 as a separator (see FIGS. 6B to 6C, FIGS. 10A to 10E, or the like).

Additionally, the sheet separation device 1 includes a plurality of conveyance paths such as a first conveyance path K1, a second conveyance path K2, a third conveyance path K3, a first branched conveyance path K4, and a second branched conveyance path K5. The above-described conveyance paths K1 to K5 each include two conveyance guide plates facing each other to guide and convey the sheet such as the two-ply sheet PJ or the insertion sheet PM.

Specifically, the two-ply sheet PJ is stacked on the first feed tray 11. The first feed roller 2 feeds the uppermost two-ply sheet PJ on the first feed tray 11 to the first conveyance roller pair 4, and the first conveyance roller pair 4 conveys the two-ply sheet PJ to the first conveyance path K1.

The insertion sheet PM is stacked on the second feed tray 12. The second feed roller 3 feeds the uppermost insertion sheet PM on the second feed tray 12 to the second conveyance path K2.

Each of the first to third conveyance roller pairs 4 to 6 includes a drive roller and a driven roller, and conveys the sheet nipped by the nips. The third conveyance path K3 includes, from the upstream side, the second conveyance roller pair 5, the winding roller 20, and the third conveyance roller pair 6. The winding roller 20 and the third conveyance roller pair 6 is configured to be able to rotate in forward or in reverse. The third conveyance roller pair 6 can convey the sheet in the forward direction that is the left direction in FIG. 1 and in the reverse direction that is the right direction in FIG. 1. The third conveyance roller pair 6 also functions as an ejection roller pair that ejects the sheet to the ejection tray 13.

Each of the first to fifth sensors 41 to 45 as a sheet detection sensor is a reflective photosensor that optically detects whether the sheet is present at the position of each sensor. The first sensor 41 is disposed in the vicinity of the downstream side of the first conveyance roller pair 4. The second sensor 42 is disposed in the vicinity of the downstream side of the second feed roller 3. The third sensor 43 is disposed in the vicinity of the downstream side of the second conveyance roller pair 5. The fourth sensor 44 is disposed in the vicinity of the downstream side of the winding roller 20 (that is the left side of the winding roller 20 in FIG. 1) and the upstream side of the third conveyance roller pair 6 (that is the right side of the third conveyance roller pair 6 in FIG. 1). The fifth sensor 45 is disposed downstream the third conveyance roller pair 6 (that is the left side of the third conveyance roller pair 6 in FIG. 1).

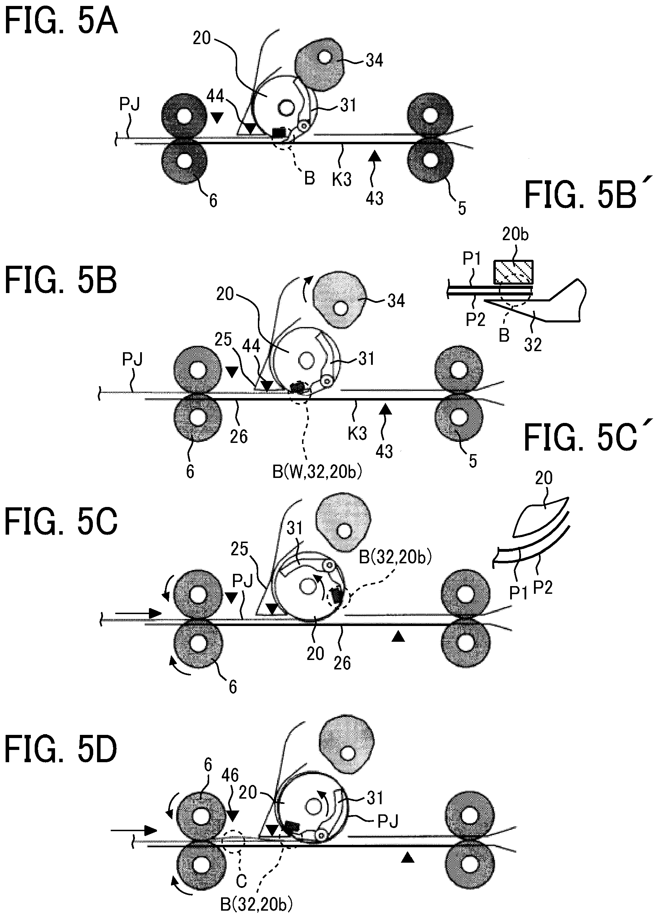

With reference to FIGS. 2A, 2B, 3A, 3B, 5B to 5D, and 6A, the winding roller 20 is described. In the winding roller 20, a gripper 32 that is one example of a gripper grips a gripped portion B of the two-ply sheet PJ at a winding start position W (see FIG. 5B). The gripped portion B is an end of the two-ply sheet PJ that is opposite an end at which the bonding portion A is formed, which is referred to as the other end of the two-ply sheet PJ. While the gripper 32 grips the gripped portion B of the two-ply sheet PJ, the winding roller 20 rotates in a predetermined rotation direction (counterclockwise in FIG. 5B) to wrap the two-ply sheet PJ around the winding roller 20.

The winding roller 20 can rotate about a rotation shaft 20a in forward and in reverse. A controller controls a drive motor that drives the winding roller 20. The controller includes one or more processing circuits or circuitry. Processing circuitry includes a programmed processor, as a processor includes circuitry. A processing circuit also includes devices such as an application specific integrated circuit (ASIC), a digital signal processor (DSP), a field programmable gate array (FPGA), and conventional circuit components.

Specifically, the two-ply sheet PJ starts from the first feed tray 11 and passes through the first conveyance path K1, and the second conveyance roller pair 5 conveys the two-ply sheet PJ in the forward direction along the third conveyance path K3. The two-ply sheet PJ passes through the winding start position W of the winding roller 20 once and is conveyed to a position of the third conveyance roller pair 6 that is a position at which the back end of the two-ply sheet PJ passes through the fourth sensor 44 but does not pass through the third conveyance roller pair 6, that is, the position in front of the third conveyance roller pair 6.

Thereafter, the third conveyance roller pair 6 rotates in reverse to convey the two-ply sheet PJ in the reverse direction to the position of the winding roller 20 that is the winding start position W, and the gripper 32 grips the two-ply sheet PJ. The gripped two-ply sheet PJ is further conveyed, and the winding roller 20 rotates counterclockwise in FIG. 1 to wrap the two-ply sheet PJ around the winding roller 20.

With reference to FIG. 5C', when the two-ply sheet PJ is wound around the winding roller 20, a length of a sheet wound around the winding roller 20 is proportional to a distance from the center of the winding roller 20 to the sheet. Therefore, since a first sheet P 1 is nearer to the center of the winding roller 20 than a second sheet P2, a length of the first sheet P1 wound around the winding roller 20 is shorter than a length of the second sheet P2 wound around the winding roller 20. As a result, misalignment occurs in a part of the two-ply sheet PJ in which the sheet P1 is in close contact with the sheet P2 (in other words, the part in which the sheet P1 sticks to the sheet P2) other than the bonding portion A and the gripped portion B. As illustrated in FIGS. 5D and 6A, the misalignment causes the upper first sheet P1 to slack and bend upward and forms a gap C between the two sheets P1 and P2 in the vicinity of the bonding portion A that is referred to as one end of the two-ply sheet PJ. As described above, the two sheets P1 and P2 that are in close contact with each other without any gap are separated from each other.

In the present embodiment, in order to significantly form the gap C as described above, that is, to increase the difference between lengths of the sheets P1 and P2 wound around the winding roller 20, the two-ply sheet PJ is wound around the winding roller 20 at least once or more.

Thus, in the present embodiment, winding the two-ply sheet PJ around the winding roller 20 can separate the two-ply sheet PJ without increasing the size and cost of the sheet separation device 1.

As illustrated in FIG. 5B', the gripper 32 in the present embodiment is configured to grip the gripped portion B of the two-ply sheet PJ without contacting the end surface of the other end of the gripped portion B on any member.

Specifically, the gripper 32 is configured to sandwich and grip the gripped portion B of the two-ply sheet PJ between the gripper 32 and a receiving portion 20b of the winding roller 20 without causing any member to abut and restrict the end surface of the other end of the two-ply sheet PJ, in other words, without causing any member to hit or contact the end surface of the two-ply sheet PJ. The receiving portion 20b is a part of an outer circumferential portion of the winding roller 20 and faces the gripper 32.

More specifically, the two-ply sheet PJ is not gripped and sandwiched by the gripper 32 and the receiving portion 20b in a state in which a specific member such as the gripper 32 abuts on the end surface of the other end (that is the tip of the other end). Without abutting the end surface of the other end that is the tip of the other end to any member, the two-ply sheet PJ is sandwiched and gripped by the outer gripper 32 and the inner receiving portion 20b.

Compared with a structure that abuts the end surface of the tip of the two-ply sheet PJ on a member, the above-described structure can reduce a disadvantage that the two-ply sheet PJ (particularly, the tip of the other end) is damaged. Since a part of the two-ply sheet PJ including a damaged front end surface is hard for the laminating process, the configuration of the present disclosure is useful.

In the present embodiment, the bonding portion A of the two-ply sheet PJ wound around the winding roller 20 is the one end of the two-ply sheet PJ. The one end is opposite to the other end serving as the gripped portion B.

In the present embodiment, at least one of the gripper 32 and the receiving portion 20b is made of elastic material such as rubber.

Compared with a sheet separation device including the gripper 32 and the receiving portion 20b that are rigid bodies made of metal or resin, the above-described sheet separation device can increase a gripping force to grip the two-ply sheet PJ and prevent surfaces of the two-ply sheet PJ from being damaged. In particular, the sheet separation device including the gripper 32 and the receiving portion 20b made of the elastic material easily exhibits the above-described effect.

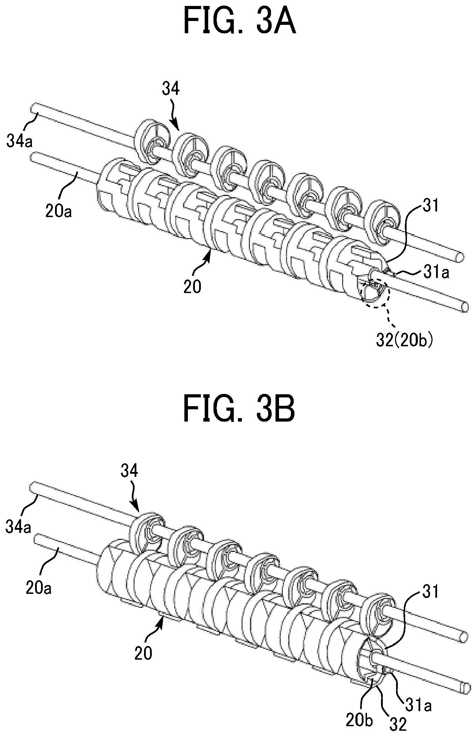

As illustrated in FIGS. 2A to 3B, the moving mechanism 30 moves the gripper 32 between a gripping position (a position illustrated in FIGS. 2A and 3A) at which the gripper 32 can grip the two-ply sheet PJ and a releasing position (a position illustrated in FIGS. 2B and 3B) at which the gripper 32 is released from the gripping position.

Specifically, the moving mechanism 30 includes an arm 31, a compression spring 33 as a biasing member, a cam 34, and a motor that rotates the cam 34 in forward or in reverse.

The arm 31 holds the gripper 32, and the arm 31 and the gripper 32 are held together by the winding roller 20 to be rotatable about a support shaft 31a. In the present embodiment, the gripper 32 is connected to the tip of arm 31, and the gripper 32 and the arm 31 are made as one part. Alternatively, the gripper 32 and the arm 31 may be made as separate members, and the gripper 32 may be disposed on the arm 31, that is, may be held by the arm 31. In any case, the arm 31 holding the gripper 32 rotates around the rotation shaft 20a together with the winding roller 20.

The compression spring 33 functions as a biasing member that biases the arm 31 so that the gripper 32 moves from the releasing position illustrated in FIG. 2B to the gripping position illustrated in FIG. 2A. Specifically, one end of the compression spring 33 is connected to a fixed part near the rotation shaft 20a, and the other end the compression spring 33 is connected to one end of the arm 31 that is an end opposite to the other end of the arm 31 connected to the gripper 32 with respect to the support shaft 31a.

The cam 34 pushes the arm 31 against the biasing force of the compression spring 33 as the biasing member so that the gripper 32 moves from the gripping position illustrated in FIG. 2A to the releasing position illustrated in FIG. 2B. A motor controlled by the controller drives the cam 34 to rotate in forward or in reverse at a desired rotation angle. The cam 34 is held by a housing of the sheet separation device 1 so as to be rotatable about a cam shaft 34a independently of the winding roller 20.

In the moving mechanism 30 configured as described above, as illustrated in FIGS. 2A and 3A, the arm 31 not contacting the cam 34 is biased by the compression spring 33 and presses the gripper 32 against the receiving portion 20b. This state is referred to as a closed state. In the closed state, the gripper 32 and the receiving portion 20b can grip the two-ply sheet PJ.

In contrast, as illustrated in FIGS. 2B and 3B, the arm 31 pressed by the cam 34 rotates counterclockwise in FIG. 2B about the support shaft 31a against the urging force of the compression spring 33 and separates the gripper 32 from the receiving portion 20b. This state is referred to as an open state. In the open state, the two-ply sheet PJ is not gripped, which is referred to as a grip release state.

In the present embodiment, as illustrated in FIGS. 3A and 3B, the winding roller 20 includes a plurality of roller portions (i.e. seven roller portions in the present embodiment) separated in the axial direction of the winding roller 20. Corresponding to the roller portions, the cam 34 includes a plurality of portions separated in the axial direction.

Setting portions separated in the axial direction to grip the two-ply sheet PJ as described above, that is, not setting entire area in the axial direction to grip the two-ply sheet PJ can share load necessary to grip the two-ply sheet PJ. The above-described configuration is useful when a necessary gripping force becomes large.

With reference to FIGS. 1, 4D, and 5A, the following describes the fourth sensor 44 in the sheet separation device 1 in the present embodiment. The fourth sensor 44 is the sheet detection sensor to detect two-ply sheet PJ conveyed between the winding roller 20 and the third conveyance roller pair 6. The fourth sensor 44 detects the front end of the two-ply sheet PJ conveyed to the winding roller 20 by the third conveyance roller pair 6. Based on results detected by the fourth sensor 44, the controller controls the moving mechanism 30.

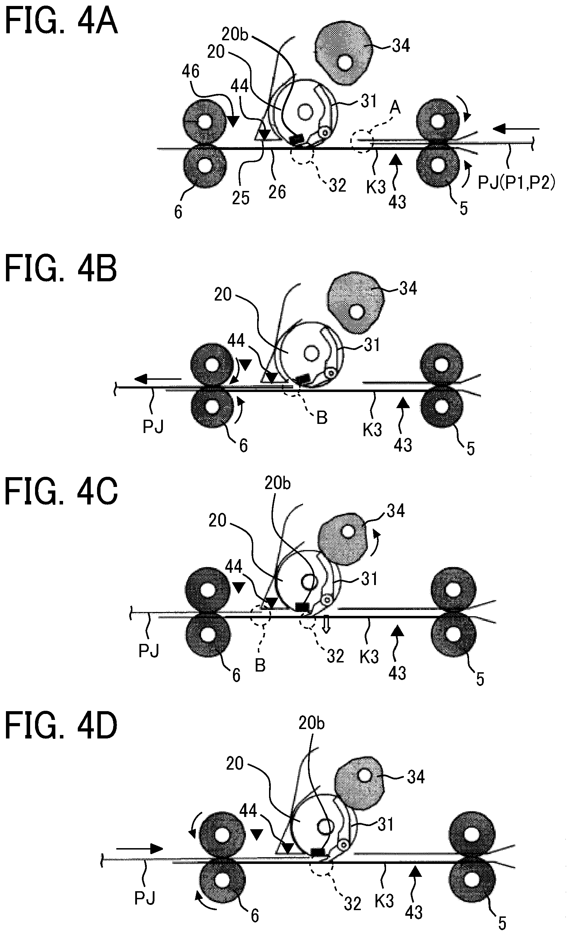

Specifically, the fourth sensor 44 is disposed on the conveyance path between the winding roller 20 and the third conveyance roller pair 6. As illustrated in FIGS. 4D and 5A, the third conveyance roller pair 6 conveys the two-ply sheet PJ in the reverse direction toward the position of the winding roller 20, so that the gripped portion B of the two-ply sheet PJ becomes a front end in the reverse direction conveyance, and the fourth sensor 44 detects the front end of the two-ply sheet PJ conveyed in the reverse direction, that is, the tip of one end of the gripped portion B. The controller uses a timing at which the fourth sensor 44 detects the tip of one end of the gripped portion B as a trigger to adjust and control a timing to stop the two-ply sheet PJ at the gripping position and a timing at which the gripper 32 grips the gripped portion B. Specifically, after a predetermined time has passed since the fourth sensor 44 detected the front end of the two-ply sheet PJ, the third conveyance roller pair 6 stops the reverse direction conveyance of the two-ply sheet PJ, and the cam 34 rotates to pivot the arm 31 of the moving mechanism 30 so that the gripper 32 moves from the releasing position illustrated in FIG. 2B to the gripping position illustrated in FIG. 2A.

The above-described control accurately performs an operation in which the end surface of the two-ply sheet PJ is sandwiched by the gripper 32 and the receiving portion 20b without abutting the end surface of the two-ply sheet PJ on any member.

As described above, the third conveyance roller pair 6 conveys the other end (i.e. the gripped portion B) of the two-ply sheet PJ as a front end toward the winding start position W of the winding roller 20 in the third conveyance path K3 between the third conveyance roller pair 6 and the winding roller 20.

With reference to FIGS. 6A to 6C, 9, 10A to 10E, and 12, the separation claws 16 as a separator are described. The separation claws 16 are claw-shaped members that move from standby positions illustrated in FIG. 10A and are inserted into the gap C formed between two sheets P1 and P2 at a predetermined position of the two-ply sheet PJ. The predetermined position is a position at which the separation claws 16 as the separator can enter the gap formed between the two sheets P1 and P2 and is determined by experiments. Preferably, the gap formed between the two sheets P1 and P2 becomes largest at the predetermined position in the sheet separation device 1.

Specifically, the separation claws 16 are inserted into the gap C formed between two sheets P1 and P2 at a position between the winding roller 20 and the third conveyance roller pair 6 from the standby positions outside both ends of the two-ply sheet PJ in the width direction of the two-ply sheet PJ in which the other end (that is the gripped portion B) is wound by the winding roller 20 and the one end (that is the bonding portion A) is nipped by the third conveyance roller pair 6.

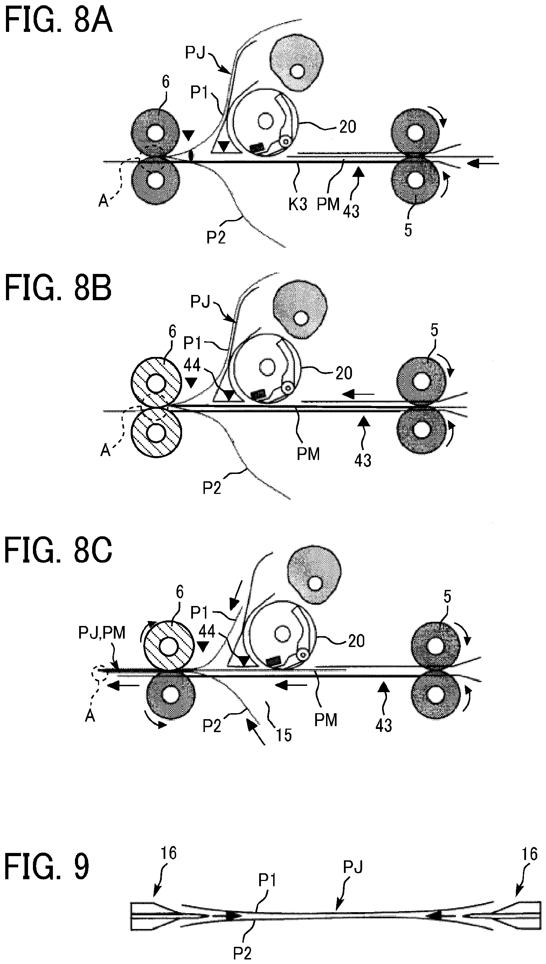

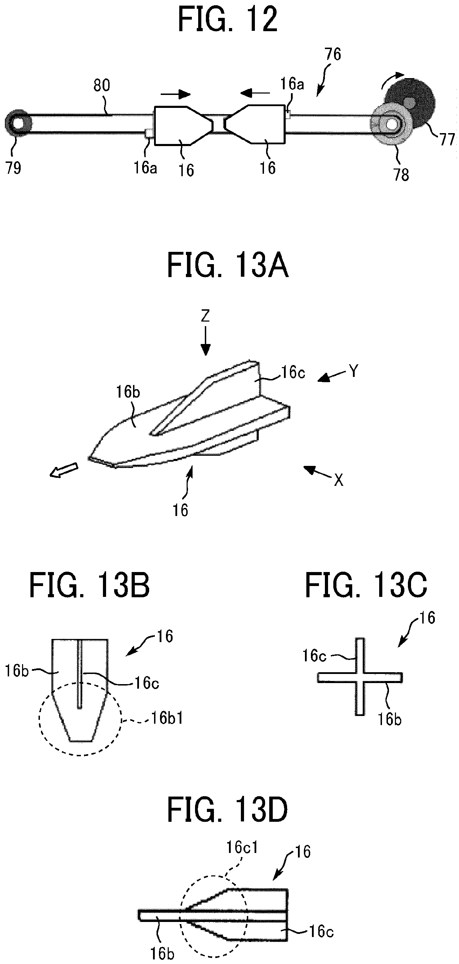

More specifically, in the present embodiment, the separation claws 16 are a pair of separation claws as a pair of separators disposed at both sides of the third conveyance path K3 in the width direction that is the direction perpendicular to a plane on which FIGS. 6A to 6C are illustrated and the horizontal direction in FIGS. 9 and 12.

As illustrated in FIGS. 10A to 10E, and 13A to 13D, the vertical length of the separation claw 16 in the thickness direction of the two-ply sheet PJ gradually increases from the tip to the end of the separation claw 16. The separation claws 16 is moved in the width direction of the two-ply sheet PJ by driving device 76 (see FIG. 12) controlled by the controller.

The separation claws 16 configured as described above ordinarily stand by at standby positions at which the separation claws 16 do not interfere with the conveyance of the sheet such as the two-ply sheet PJ in the third conveyance path K3. As illustrated in FIG. 10A, the standby positions are outside of the sheet P in the width direction of the sheet P. Subsequently, as illustrated in FIGS. 9 and 10B, the separation claws 16 enter the gap C in the two-ply sheet PJ when the two-ply sheet PJ (configured by two sheets P1 and P2) is separated. As a result, the separation claws 16 secure the gap C to be large.

As illustrated in FIG. 12, the driving device 76 moves the pair of separation claws 16 in the width direction and includes a motor 77, a gear pulley 78, a pulley 79, a timing belt 80.

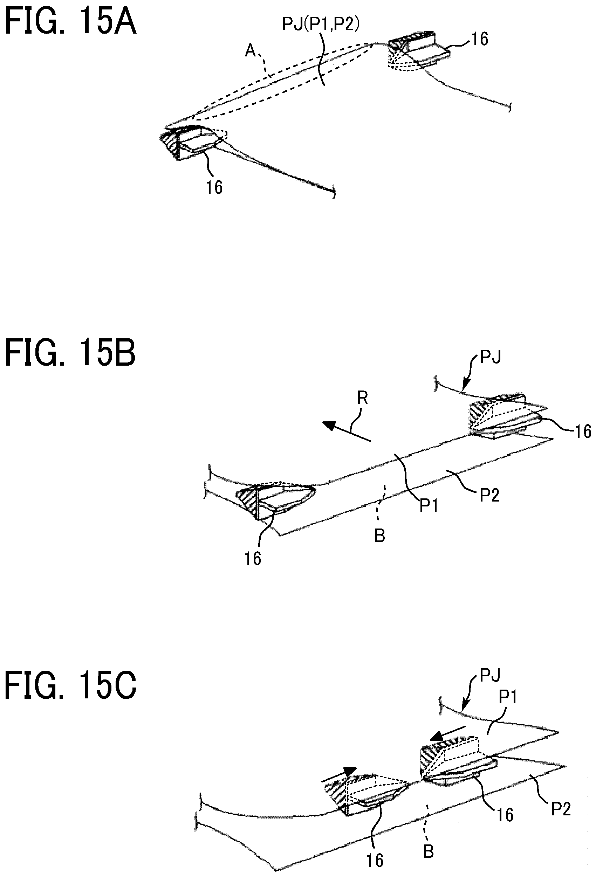

The gear pulley 78 has a step-like ring shape including a gear that meshes with a motor gear disposed on a motor shaft of the motor 77 and a pulley that stretches and supports the timing belt 80 together with the pulley 79. One separation claw 16 of the pair of separation claws 16 includes the fixed portion 16a fixed to the belt surface of the timing belt 64 that is the upper side of the belt surface in FIG. 15, and the other separation claw 16 includes the fixed portion 16a fixed to the other belt surface of the timing belt 64 that is the lower side of the belt surface in FIG. 15.

In the driving device 76 as configured described above, the motor 77 drives to rotate the motor shaft in a direction indicated by arrow in FIG. 12 (i.e. clockwise), the gear pulley 78 rotates counterclockwise, the timing belt 80 rotates counterclockwise, and the pair of separation claws 16 moves from the outside portions in the width direction to the center portion in the width direction (that is, the pair of separation claws 16 approaches each other). In contrast, when the motor 77 drives to rotate the motor shaft in the direction opposite to the arrow direction in FIG. 12, the pair of separation claws 16 moves from the center portion in the width direction toward the outside portions in the width direction (that is, the pair of the separation claws 16 moves in a direction away from each other).

The separation claws 16 are inserted into the gap C in the two-ply sheet PJ, relatively move from the one end of the two-ply sheet PJ near the bonding portion A to the other end of the two-ply sheet PJ near the gripped portion B, and subsequently move in the width direction between the two sheets P1 and P2 at the other end of the two-ply sheet PJ.

Specifically, the controller controls a driving device 76 (see FIG. 12) to move the pair of separation claws 16 as follows. As illustrated in FIGS. 10B and 10C, the pair of separation claws 16 is inserted into the both ends of the gap C in the two-ply sheet PJ in the width direction and relatively moves to the other end of the two-ply sheet PJ that is the gripped portion B. After the pair of separation claws 16 reaches to the other end of the two-ply sheet PJ, as illustrated in FIG. 10D, the pair of separation claws 16 on the other end of the two-ply sheet PJ moves in the width direction from the both ends of the two-ply sheet PJ to the center of the two-ply sheet PJ between the two sheets P1 and P2. To enable the above-described operations of the pair of separation claws 16, the driving device 76 is configured so that the pair of separation claws 16 can move from the standby positions to positions at which the pair of separation claws 16 is close to each other.

The above-described mechanism including the winding roller 20 winding the two-ply sheet PJ and the separation claws 16 inserted into the two-ply sheet PJ to separate the two-ply sheet PJ can reduce the size of the sheet separation device as compared with a mechanism using a large-scale device such as a vacuum device to separate the two-ply sheet PJ. That is, without increasing the size of the sheet separation device 1, the above-described mechanism can satisfactorily separate the two sheets P1 and P2 constituting the two-ply sheet PJ.

In particular, since the separation claws 16 in the present embodiment move over substantially an entire region of the two-ply sheet PJ on the other end of the two-ply sheet PJ (that is the back end of the two-ply sheet PJ), the separation claws 16 can sufficiently separate (in other words, peel) the other end of the two sheets P1 and P2 constituting the two-ply sheet PJ that is opposite the bonding portion A. The above-described configuration prevents a disadvantage that the other end of the two-ply sheet PJ that is opposite the bonding portion A is not sufficiently separated and the insertion sheet PM (see FIG. 10E) cannot be inserted into the other end of the two-ply sheet PJ. Additionally, the above-described configuration allows the separation claws 16 as a divider to easily function, that is, separately guide the two sheets P1 and P2 to the two branched conveyance paths K4 and K5. The function of the separation claws 16 as the divider is described below.

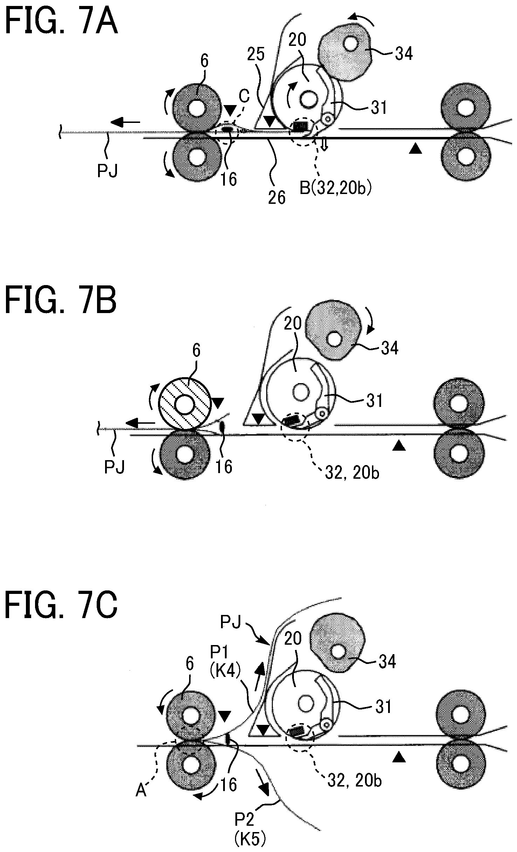

With reference to FIGS. 7A to 7C, the separation claws 16 as the divider are described. The separation claws 16 also function as the divider that guides the two sheets P1 and P2 separated by the separation claws 16 to the two branched conveyance paths K4 and K5 that branch off in different directions, respectively.

Specifically, as illustrated in FIG. 7C, the two branched conveyance paths K4 and K5 branch off in different directions from the third conveyance path K3 between the separation claws 16 and the winding roller 20. In other words, the third conveyance path K3 is interposed by the two branched conveyance paths K4 and K5. The first branched conveyance path K4 branches upward from the third conveyance path K3, and the second branched conveyance path K5 branches downward from the third conveyance path K3.

As illustrated in FIGS. 7A to 7C, the third conveyance roller pair 6 conveys the one end of the two-ply sheet PJ to the left side in FIG. 7A after the separation claws 16 are inserted into the gap C until the winding of the other end of the two-ply sheet PJ on the winding roller 20 is released (see FIGS. 10A to FIG. 10C). After the winding of the other end of the two-ply sheet PJ on the winding roller 20 is released, the separation claws 16 move to a center portion of the two-ply sheet PJ as illustrated in FIG. 10D and stop at the center portion, and the third conveyance roller pair 6 conveys the other end of the two-ply sheet PJ to the right side in FIG. 7 again. Then, the separation claws 16 guide the two sheets P1 and P2 separated by the separation claws 16 to the two branched conveyance paths K4 and K5, respectively. As a result, the first sheet P1 is guided to the first branched conveyance path K4, and the second sheet P2 is guided to the second branched conveyance path K5. Subsequently, as illustrated in FIGS. 8A to 8C and 10E, the separation claws 16 move to the standby positions, and the second conveyance roller pair 5 conveys the insertion sheet PM to the third conveyance path K3, that is, the right side in FIGS. 8A to 8C to insert the insertion sheet PM between the two sheets P1 and P2 separated from the two-ply sheet PJ.

As described above, the separation claws 16 in the present embodiment functions as a separator that separates (in other words, peels) the non-bonding portion of the two-ply sheet PJ configured by the two sheets P1 and P2, and also functions as a divider that separately guides the separated two sheets P1 and P2 to the two branched conveyance paths K4 and K5, respectively. Accordingly, the above-described configuration can reduce the size and cost of the sheet separation device 1 compared to the sheet separation device including both the separator and the divider. That is, the above-described configuration can satisfactorily separate the two sheets P1 and P2 constituting the two-ply sheet PJ.

With reference to FIG. 13, the separation claw 16 according to the present embodiment as the separator is more specifically described. The separation claw 16 includes a first plate 16b and a second plate 16c. The thickness direction of the first plate 16b is substantially the same as the thickness direction of the two-ply sheet PJ. The second plate 16c intersects the first plate 16b in the thickness direction of the first plate 16b. The first plate 16b and the second plate 16c are formed as one part.

FIG. 13A is a perspective view of the separation claw 16. In FIG. 13A, the separation claw 16 moves in a direction indicated by a white arrow, that is, moves toward the gap C in the two-ply sheet PJ. FIG. 13C is a rear view of the separation claw 16 viewed from y direction in FIG. 13A. As illustrated in FIG. 13C, the separation claw 16 has a substantially cross shape configured by the first plate 16b extending in the lateral direction in FIG. 13C that is a conveyance direction of the two-ply sheet PJ and the second plate 16c extending in the vertical direction that is a direction in which the gap C is formed.

As illustrated in FIG. 10D, the second plate 16c extending in the thickness direction of the two-ply sheet PJ (that is the direction in which the gap C is formed) as described above can enlarge the distance between the two sheets P1 and P2 by at least a vertical length of the second plate 16c when the separation claw 16 enters between the two sheets P1 and P2. As a result, the separation claws 16 can easily guide the two sheets P1 and P2 to the two branched conveyance paths K4 and K5, respectively. That is, the function of the separation claw 16 as the divider is easily exhibited.

As illustrated in FIG. 13D, the separation claw 16 includes a tapered portion 16c1. A length of the tapered portion 16c1 in the thickness direction of the two-ply sheet PJ (that is the vertical direction in FIG. 13D) gradually increases outward in the width direction of the two-ply sheet PJ.

Specifically, as illustrated in FIGS. 13A, 13B, and 13D, the tip of the second plate 16c near the center of the two-ply sheet PJ in the width direction of the two-ply sheet PJ is positioned further outward in the width direction of the two-ply sheet PJ than the tip of the first plate 16b near the center of the two-ply sheet PJ in the width direction of the two-ply sheet PJ. In addition, the back end of the second plate 16c that is an outer end of the second plate 16c in the width direction of the two-ply sheet PJ is the same position in the width direction of the two-ply sheet PJ as the back end of the first plate 16b that is an outer end of the first plate 16b in the width direction of the two-ply sheet PJ. The tapered portion 16c1 extends in a horizontal direction in FIG. 13D from the tip of the second plate 16c near the center of the two-ply sheet PJ in the width direction of the two-ply sheet PJ and gradually increases the vertical length from the left to the right in FIG. 13D.

More specifically, the second plate 16c has an upper trapezoidal portion and a lower trapezoidal portion that sandwich the first plate 16b as illustrated in FIG. 13D.

The second plate 16c (that is, the separation claw 16) including the tapered portion 16c1 as described above prevents a disadvantage that the separation claw 16 is caught by the sheet P1 or P2 when the separation claw 16 enters into the gap C in the two-ply sheet PJ from the standby position as illustrated in FIGS. 10A and 10B. That is, the separation claw 16 smoothly enters the gap C in the two-ply sheet PJ, and the second plate 16c separates the two sheets P1 and P2 at a sufficient interval.

As illustrated in FIG. 13B, the separation claw 16 includes a tapered portion 16b1. A length of the tapered portion 16b1 in the conveyance direction of the two-ply sheet PJ (that is the horizontal direction in FIG. 13B) gradually increases outward in the width direction of the two-ply sheet PJ.

Specifically, as illustrated in FIGS. 13A, 13B, and 13D, the tip of the first plate 16b near the center of the two-ply sheet PJ in the width direction of the two-ply sheet PJ is positioned nearer to the center of the two-ply sheet PJ in the width direction of the two-ply sheet PJ than the tip of the second plate 16c near the center of the two-ply sheet PJ in the width direction of the two-ply sheet PJ.

The tapered portion 16b 1 extends in the vertical direction in FIG. 13B from the tip of the first plate 16b near the center of the two-ply sheet PJ in the width direction of the two-ply sheet PJ, and a length of the tapered portion 16b 1 in the conveyance direction of the two-ply sheet PJ gradually increases from the lower side to the upper side in FIG. 13B.

More specifically, as illustrated in FIG. 13B, the tip of the first plate 16b is substantially V-shaped.

The first plate 16b (that is, the separation claw 16) including the tapered portion 16b 1 as described above prevents the disadvantage that the separation claw 16 is caught by an end of the tow-ply sheet PJ forming a gap C in the width direction of the two-ply sheet PJ when the separation claw 16 enters into the gap C in the two-ply sheet PJ from the standby position as illustrated in FIGS. 10A and 10B. That is, the separation claw 16 smoothly enters the gap C in the two-ply sheet PJ, increases the width of the gap C, and separates the two sheets P1 and P2.

With reference to FIGS. 6A to 6C, the first guide 25 is described below. The first guide 25 is disposed between the separation claws 16 and the winding roller 20 in the third conveyance path K3 and functions as a limiter to limit an amount of slack (in other words, a deflection amount) of the first sheet P1 that is an inner sheet of the two sheet P1 and P2 of the two-ply sheet PJ wound around the winding roller 20.

Specifically, the first guide 25 as the limiter is a conveyance guide disposed on the side in which the winding roller 20 is disposed with respect to an imaginary plane S1, that is, above the imaginary plane S 1 in FIG. 6A, in the third conveyance path. The imaginary plane S 1 is an imaginary plane passing through the winding start position W of the winding roller 20 and the nip of the third conveyance roller pair 6 in the third conveyance path (see FIG. 6A). The first guide 25 has a shape like a triangular prism having a plane along the outer circumferential surface of the winding roller 20, and the plane covers a part of the outer circumferential surface of the winding roller 20 and is separated from the winding roller 20 by a predetermined gap. The first guide 25 functions as a conveyance guide of the third conveyance path K3 and a conveyance guide of the first branched conveyance path K4. That is, the first guide 25 guides the sheet conveyed on the third conveyance path K3, the sheet conveyed on the first branched conveyance path K4, and the sheet wound around the winding roller 20.

In the third conveyance path K3, the first guide 25 limits bending the two-ply sheet PJ upward (in particular, bending the first sheet P1 upward) between the winding roller 20 and the third conveyance roller pair 6. Therefore, the gap C in the two-ply sheet PJ that is mainly formed by bending the first sheet P1 upward is intensively formed between the first guide 25 and the third conveyance roller pair 6. Accordingly, the above-described configuration can increase the size of the gap C even if the winding amount of the two-ply sheet PJ wound around the winding roller 20 is not large, and the separation claws 16 can smoothly enter the gap C to separate the two-ply sheet PJ.

With reference to FIGS. 6 A to 6 C, the second guide 26 is described below. The second guide 26 is disposed between the separation claws 16 and the winding roller 20 in the third conveyance path K3 and functions as a guide to guide the second sheet P2 that is an outer sheet of the two sheet P1 and P2 of the two-ply sheet PJ wound around the winding roller 20.

Specifically, the second guide 26 as the guide is a conveyance guide disposed on the side in which the winding roller 20 is not disposed with respect to the imaginary plane S1, that is, below the imaginary plane S1 in FIG. 6A, in the third conveyance path. The second guide 26 is disposed to face the lower surface of the sheet from a portion upstream from the second conveyance roller pair 5 to a portion downstream from the third conveyance roller pair 6 in the forward direction. That is, the second guide 26 guides the sheet conveyed on the third conveyance path K3.

In the third conveyance path K3 between the winding roller 20 and the third conveyance roller pair 6, a clearance between the first guide 25 and the second guide 26 is set to be a value by which the sheet having the largest thickness can be conveyed to limit a gap between the sheets P1 and P2 of the two-ply sheet PJ between the first guide 25 and the second guide 26 not to be too large. Therefore, the gap C in the two-ply sheet PJ that is mainly formed by bending the first sheet P1 upward is intensively formed between an end of the first guide 25 and the third conveyance roller pair 6. Accordingly, the separation claws 16 can smoothly enter the gap C to separate the two-ply sheet PJ.

With reference to FIGS. 6A to 6C, the abnormality detection sensor 46 is described below. The abnormality detection sensor 46 functions as an abnormality detection device to detect an abnormal state in which the gap C formed between the two sheets P1 and P2 at a predetermined position (that is between the third conveyance roller pair 6 and the winding roller 20) is not larger than a predetermined size before movements of the separation claws 16 from the standby positions (that is, movements from the standby positions illustrated in FIG. 10A to separation positions illustrated in FIGS. 9 and 10B ). The predetermined size is a size of the gap C into which the separation claws 16 can enter and is determined by experiments. That is, the abnormality detection sensor 46 as the abnormality detection device detects the abnormal state in which the gap C formed between the two sheets P1 and P2 at a predetermined position is not larger than the predetermined size before the separation claws 16 are inserted into the gap C.

In other words, at a timing at which the gap C is formed between the two sheets P1 and P2 as illustrated in FIGS. 5D and 6A, the abnormality detection sensor 46 as the abnormality detection device detects the abnormal state such as a state in which the gap is not formed at all or a state in which the gap is not formed as a sufficient gap C.

In the present embodiment, the controller notifies the occurrence of the abnormal state when the abnormal state is detected by the abnormality detection sensor 46 that is the abnormality detection device. Specifically, as illustrated in FIG. 1, the sheet separation device 1 includes an operation display panel 49 as an operation display device on the exterior of the sheet separation device 1 to display various kinds of information about the sheet separation device 1 and input various kinds of commands. When the controller determines that the abnormal state occurs based on the results detected by the abnormality detection sensor 46, that is, when the two-ply sheet PJ does not have the sufficiently large gap C, the controller controls the operation display panel 49 to display that the abnormal state is detected. For example, the operation display panel 49 displays "Since an abnormality has occurred, the process of inserting the insertion sheet is stopped. Please check the setting direction of the two-ply sheet in the first feed tray. If the setting direction is correct and similar abnormalities are repeated, please contact a service person. ".

The above-described abnormality detection sensor 46 as the abnormality detection device may be a lever type sensor that comes into contact with the upper first sheet P1 of the two-ply sheet PJ forming the gap C larger than the predetermined size or other type sensors.

With reference to FIGS. 4A to 8C, the following describes operations of the sheet separation device 1 to separate the two-ply sheet PJ.

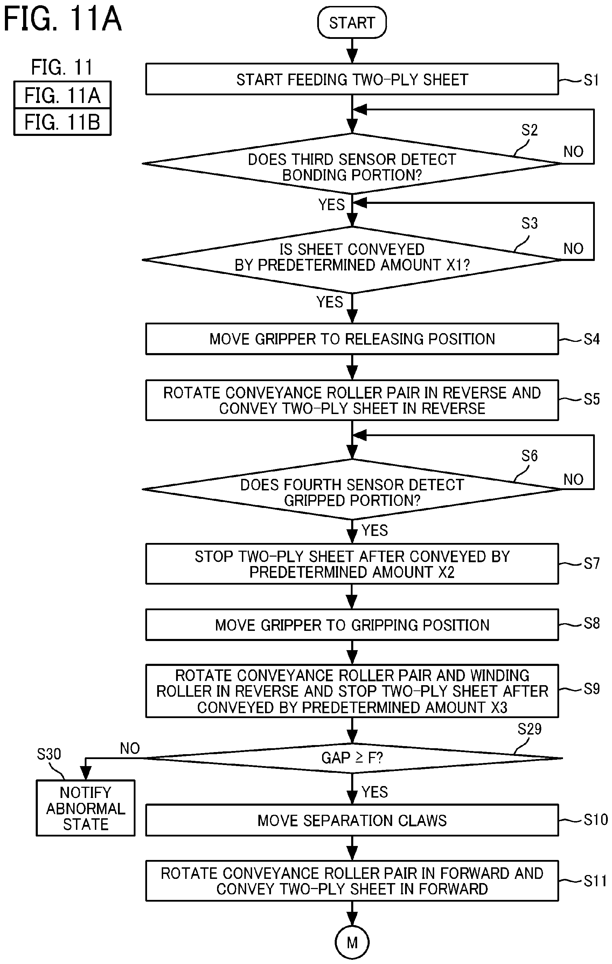

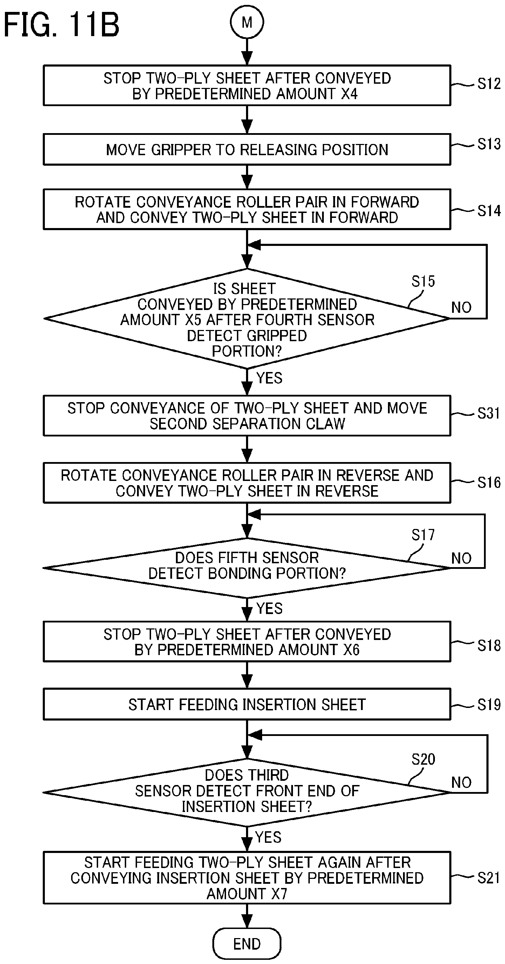

In the description of the operations, operations of the separation claws 16 is appropriately described with reference to FIGS. 9 to 10E, and the control flow is described with reference to a flowchart of FIG. 11, that is, FIGS. 11A and 11B.

After the first feed roller 2 and the first conveyance roller pair 4 start feeding the two-ply sheet PJ from the first feed tray 11 in step S1 of FIG. 11A, as illustrated in FIG. 4A, the second conveyance roller pair 5 conveys the two-ply sheet PJ with the bonding portion A as a front end in the forward direction that is a direction from the right side to the left side in FIG. 4A in the third conveyance path K3.

At this time, the controller controls the moving mechanism 30 so that the gripper 32 is positioned at the gripping position. That is, the cam 34 moves to a rotational position at which the cam 34 does not push the arm 31. When the gripper 32 is positioned at the gripping position as described above, the gripper 32 does not interfere the sheet conveyance in the third conveyance path K3. The separation claws 16 stand by at the standby positions (illustrated in FIG. 10A) at which the separation claws 16 do not interfere with the conveyance of the sheets in the third conveyance path K3. Subsequently, the controller determines whether the third sensor 43 detects the bonding portion A of the two-ply sheet PJ (that is a front end of the two-ply sheet PJ conveyed in the forward direction and the one end of the two-ply sheet PJ) in step S2 of FIG. 11A.

The controller uses a timing at which the third sensor 43 detects the bonding portion A as a trigger and, as illustrated in FIG. 4B, the controller controls the third conveyance roller pair 6 to convey the two-ply sheet PJ in the forward direction by a predetermined amount X1 until the gripped portion B of the two-ply sheet PJ (that is the other end of the two-ply sheet PJ and a back end of the two-ply sheet PJ conveyed in the forward direction) passes through the position of the winding roller 20 in step S3 of FIG. 11A.

As illustrated in FIG. 4C, the controller temporarily stops the third conveyance roller pair 6 to stop the conveyance of the two-ply sheet PJ conveyed by the predetermined amount X1 and controls the gripper 32 to move from the gripping position to the releasing position in step S4 of FIG. 11A. That is, the cam 34 moves to a rotational position at which the cam 34 pushes the arm 31. In this state, the gripped portion B of the two-ply sheet PJ can be received between the gripper 32 and the receiving portion 20b.

Then, as illustrated in FIG. 4D, the third conveyance roller pair 6 rotates in reverse to start conveyance of the two-ply sheet PJ in the reverse direction in step S5 of FIG. 11A. At this time, the fourth sensor 44 detects the gripped portion B of the two-ply sheet PJ that is the other end of the two-ply sheet PJ and the front end of the two-ply sheet PJ conveyed in the reverse direction.

Subsequently, as illustrated in FIG. 5A, the controller uses the timing at which the fourth sensor 44 detects the gripped portion B of the two-ply sheet PJ as a trigger in step S6 of FIG. 11A and stops the conveyance of the two-ply sheet PJ in step S7 of FIG. 11A at a timing at which the third conveyance roller pair 6 conveys the two-ply sheet PJ by a predetermined amount X2 that is a timing at which the gripped portion B of the two-ply sheet PJ reaches the position of the winding roller 20 that is the winding start position W.

After the gripped portion B reaches the winding start position W, as illustrated in FIG. 5B, the gripper 32 is moved from the releasing position to the gripping position in step S8 of FIG. 11A. That is, the cam 34 moves to a rotational position at which the cam 34 does not push the arm 31. In step S8, as illustrated in FIG. 5B', the end surface of the other end of the two-ply sheet PJ does not abut on any member, and the gripped portion B is gripped between the gripper 32 and the receiving portion 20b.

Next, as illustrated in FIG. 5C, the winding roller 20 rotates in reverse (that is, counterclockwise) while the gripper 32 grips the two-ply sheet PJ, and the third conveyance roller pair 6 again rotates in reverse together with the winding roller 20. As the winding roller 20 rotates, the gap C is formed between the two sheets P1 and P2 of the two-ply sheet PJ between the winding roller 20 and the third conveyance roller pair 6 as illustrated in FIG. 5D. While the gap C is formed, the first guide 25 and the second guide 26 limit the bend of the two-ply sheet PJ in the vicinity of the winding roller 20. Accordingly, the gap C of the two-ply sheet PJ is intensively formed near the third conveyance roller pair 6.

Since the controller uses the timing at which the fourth sensor 44 disposed downstream from the third conveyance roller pair 6 in the reverse direction detects the gripped portion B of the two-ply sheet PJ conveyed in the reverse direction as the trigger to determine the timing at which the gripper 32 and the receiving portion 20b grip the gripped portion B, the gripped portion B of the two-ply sheet PJ can be accurately conveyed to a desired gripping position regardless of variations in sheet lengths with respect to the sheet conveyance amount X2 (Note that the size of sheets includes an error even if the sheets are sold as the same size).

The fourth sensor 44 can shorten the sheet conveyance amount X2 that is measured since the fourth sensor 44 detects the front end of the two-ply sheet PJ conveyed in the reverse direction regardless of the sheet length. Therefore, the above-described configuration can reduce variation in the conveyance amount X2 and enables an accurate conveyance of the gripped portion B of the two-ply sheet PJ to the desired gripping position. Accordingly, the fourth sensor 44 is preferably disposed near the winding roller 20.

With reference to FIG. 5C', a mechanism that winding the two-ply sheet PJ around the winding roller 20 generates the gap C in the two-ply sheet PJ between the winding roller 20 and the third conveyance roller pair 6 is described above.

The following additionally describes the mechanism.

In the two-ply sheet PJ wound around the winding roller 20, the gripped portion B of the two-ply sheet PJ gripped by the gripper 32 does not generate a slip between the sheets P1 and P2. However, winding the two-ply sheet PJ around the winding roller 20 generates the difference in winding circumferential length between the two sheets P1 and P2 and, therefore, causes a slip between the two sheets P1 and P2, and a conveyance amount of the inner sheet P1 is smaller than a conveyance amount of the outer sheet P2. As a result, slack occurs in the inner sheet P1 between the nip of the third conveyance roller pair 6 and the winding roller 20. Winding the two-ply sheet PJ around the winding roller 20 one or more times additionally generates the difference in winding circumferential length between the inner circumference and the outer circumference by the thickness of the sheet and increases the slack.

Specifically, a distance from the rotation shaft 20a (i.e. the center of the shaft) of the winding roller 20 to the outer sheet P2 is R + ΔR when a distance from the rotation shaft 20a (i.e. the center of the shaft) of the winding roller 20 to the inner sheet P1 is R, and the thickness of the inner sheet P1 is Δ R. The difference between a radius of the inner sheet P1 wound around the winding roller 20 and a radius of the outer sheet P2 wound around the inner sheet P1, that is, the thickness of the inner sheet P1 Δ R, generates a circumferential length difference of 2 × Δ R × π when the two-ply sheet PJ is wound around the winding roller 20 by one round. Therefore, winding the two-ply sheet PJ around the winding roller 20 M times generates the circumferential length difference 2 × Δ R × π × M that is a slack of the inner sheet P1.

Finally, the slack is accumulated between the third conveyance roller pair 6 and the winding roller 20, and the gap C corresponding to 2 × Δ R × π × M is formed between the two sheets P1 and P2.

In step S9 of FIG. 11A, after the winding roller 20 starts the winding of the two-ply sheet PJ, as illustrated in FIG. 6A, the third conveyance roller pair 6 stops the conveyance of the two-ply sheet PJ and the winding roller 20 stops the winding of the two-ply sheet PJ at the timing at which the third conveyance roller pair 6 conveys the two-ply sheet by a predetermined amount X3.

In this state, the two-ply sheet PJ is wound around the winding roller 20 one or more times, and the gap C in the two-ply sheet PJ (a distance between the sheet P1 and the sheet P2) is sufficiently widened if the two-ply sheet PJ is normally separated. When the gap C is widened, the controller determines whether the gap C formed in the two-ply sheet PJ is equal to or larger than a predetermined distance F based on results detected by the abnormality detection sensor 46 in step S29 of FIG. 11A. When the controller determines that the gap C is the sufficiently large gap equal to or larger than the predetermined size F, the controller determines that subsequent separation operations of the separation claws 16 do not cause a problem and controls the separation claws 16 to insert into the gap C sufficiently widened in the two-ply sheet PJ as illustrated in FIG. 6 B in step S10 of FIG. 11A. That is, as illustrated in FIGS. 9 and 10A, each of the pair of separation claws 16 is moved from the standby position to the separation position.

Next, as illustrated in FIG. 6C, the third conveyance roller pair 6 and the winding roller 20 start rotating in forward, that is, clockwise in step S11 of FIG. 11A after the separation claws 16 are inserted into the gap C. That is, as illustrated in FIGS. 10A to 10C, the separation claws 16 inserted into the gap C of the two-ply sheet PJ relatively move from the one end A to the other end B with respect to the two-ply sheet PJ. The above-described relative movement in the present embodiment is caused by moving the two-ply sheet PJ itself in a direction indicated by arrow in FIGS. 10B and 10C without changing the positions of separation claws 16 in the conveyance direction.

In step S12 of FIG. 11B, as illustrated in FIG. 7A, the controller stops forward rotation in the third conveyance roller pair 6 and forward rotation in the winding roller 20 after the forward rotation in the third conveyance roller pair 6 conveys the two-ply sheet PJ by a predetermined amount of X4. At this time, the gripped portion B of the two-ply sheet PJ is positioned on the third conveyance path K3 (that is, at the winding start position W illustrated in FIG. 5B), and the gripper 32 can release the gripped portion B. In addition, as illustrated in FIG. 10C, the separation claws 16 stop near the other end of the two-ply sheet PJ after the separation claws 16 are inserted into the gap C of the two-ply sheet PJ and relatively moves to the other end B of the two-ply sheet PJ with respect to the two-ply sheet PJ.

In this state, the gripper 32 moves from the gripping position to the releasing position in step S13 of FIG. 11B. That is, the cam 34 moves to a rotational position at which the cam 34 does not push the arm 31. The gripper 32 releases gripping the two-ply sheet PJ. In the present embodiment, the cam 34 in the moving mechanism 30 moves to release the gripping of the gripper 32, but the third conveyance roller pair 6 may pull the two-ply sheet PJ from the gripper 32 to release the gripping and convey the two-ply sheet without the above-described movement of the cam 34 in the moving mechanism 30 when a pulling force due to the conveyance of the third conveyance roller pair 6 is larger than a force of the gripper 32 that grips the tow-ply sheet PJ. In step S14 of FIG. 11B, as illustrated in FIG. 7B, the third conveyance roller pair 6 again rotates in forward to start conveyance of the two-ply sheet PJ in the forward direction.

In addition, after the gripped portion B of the two-ply sheet PJ that is the other end of the two-ply sheet PJ and the back end of the two-ply sheet PJ passes over a branch portion between the third conveyance path K3 and the branched conveyance paths K4 and K5, the gripper 32 moves from the releasing position to the gripping position, and, at this time, the fourth sensor 44 detects the gripped portion B of the two-ply sheet PJ that is the other end of the two-ply sheet PJ and the back end of the two-ply sheet PJ conveyed in the forward direction. The controller determines whether the third conveyance roller pair 6 conveys the two-ply sheet PJ by a predetermined amount X5 after the timing, as a trigger, at which the fourth sensor 44 detects the back end of the two-ply sheet PJ conveyed in the forward direction in step S15 of FIG. 11B and stops the conveyance of the two-ply sheet PJ when the third conveyance roller pair 6 conveys the two-ply sheet PJ by the predetermined amount X5. In step S31 of FIG. 11B, the separation claws 16 move in the width direction as illustrated in FIG. 10D. As a result, as illustrated in FIG. 7B, back ends of the two sheets P1 and P2 of the two-ply sheet PJ conveyed in the forward direction are separated and largely opened (see FIG. 10D).

Then, as illustrated in FIG. 7C, the third conveyance roller pair 6 rotates in reverse to start conveyance of the two-ply sheet PJ in the reverse direction in step S16 of FIG. 11B. At this time, since the separation claws 16 are disposed at the switching positions at which the separation claws 16 block the two-ply sheet PJ moving to the third conveyance path K3 (that is the position illustrated in FIG. 10D), the two sheets P1 and P2 separated each other are guided to the two branched conveyance paths K4 and K5, respectively, as illustrated in FIG. 7C. At this time, the fifth sensor 45 (see FIG. 1) detects the bonding portion A of the two-ply sheet PJ that is the one end of the two-ply sheet PJ and the back end of the two-ply sheet PJ conveyed in the reverse direction.

Subsequently, the controller uses, as a trigger, the timing at which the fifth sensor 45 (see FIG. 1) detects the back end of the two-ply sheet PJ conveyed in the reverse direction that is the bonding portion A in step S 17 of FIG. 11B and stops the conveyance of the two-ply sheet PJ at a timing at which the third conveyance roller pair 6 conveys the two-ply sheet PJ by a predetermined amount X6 as illustrated in FIG. 8A in step S18 of FIG. 11B. When the third conveyance roller pair 6 conveys the two-ply sheet PJ by the predetermined amount X6, the bonding portion A of the two-ply sheet PJ is in the nip of the third conveyance roller pair 6 or at a position slightly leftward from the nip. That is, the third conveyance roller pair 6 nips the one end of the two-ply sheet PJ.

Subsequently, as illustrated in FIG. 8A, the second conveyance roller pair 5 starts feeding the insertion sheet PM from the second feed tray 12 (see FIG. 1) in step S19 of FIG. 11B. At this time, the third sensor 43 detects the front end of the insertion sheet PM conveyed in the forward direction that is also referred to as the one end of the insertion sheet PM. In addition, as illustrated in FIG. 8B, the separation claws 16 move to the standby position. Subsequently, the controller uses the timing at which the third sensor 43 detects the front end of the insertion sheet PM as a trigger in step S20 of FIG. 11B.

After the second conveyance roller pair 5 conveys the insertion sheet PM by a predetermined amount X7 since the third sensor 43 detects the front end of the insertion sheet PM, the third conveyance roller pair 6 again starts the conveyance of the two-ply sheet PJ in the forward direction in step S21 of FIG. 11B as illustrated in FIGS. 8C and 10E. At this time, the insertion sheet PM is accurately sandwiched at a desired position between the two sheets P1 and P2. Thus, the controller ends processes to insert the insertion sheet PM between the two sheets P1 and P2 in the two-ply sheet PJ. The third conveyance roller pair 6 conveys the two-ply sheet PJ with the insertion sheet PM inserted therein in the forward direction, and the two-ply sheet PJ with the insertion sheet PM inserted therein is ejected and placed on the ejection tray 13 (see FIG. 1).

In contrast, when the controller determines that the gap C in the two-ply sheet PJ is not the sufficiently large gap equal to or larger than the predetermined distance F in step S29 of FIG. 11A, that is, when the controller determines that the abnormal state occurs based on results detected by the abnormality detection sensor 46, the controller determines that subsequent separation operations of separation claws 16 cause various kinds of problems and does not move the separation claws 16 from the standby positions to the separation positions. In addition, the controller controls the operation display panel 49 (see FIG. 1) to notify that the occurrence of the abnormal state stops the separation operations and the insertion operations of the insertion sheet PM in step S30 of FIG. 11A.

Next, a first variation is described.

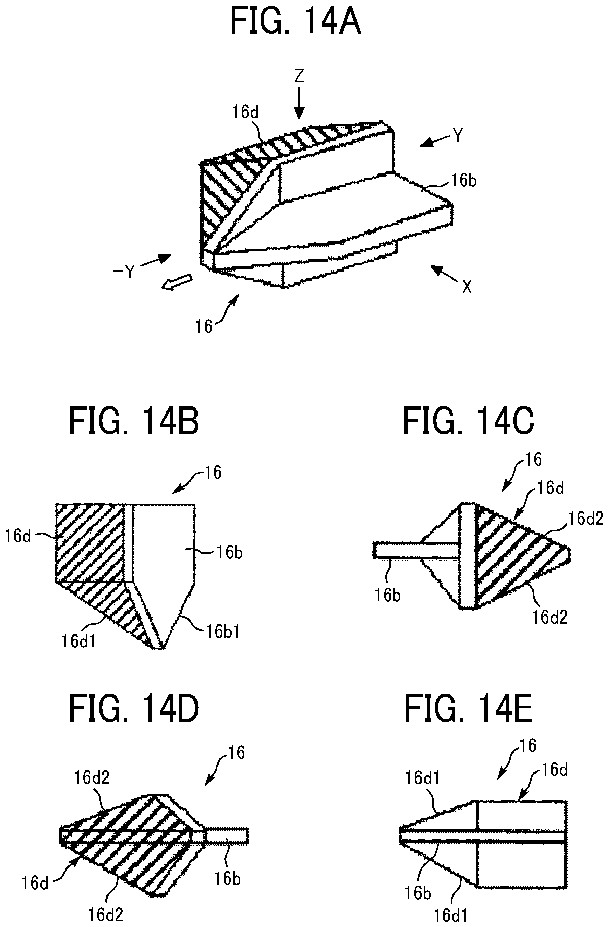

The sheet separation device according to the first variation includes a separation claw 16 different from the separation claw described above. As illustrated in FIGS. 14A to 14D, the separation claw 16 in the first variation includes a plate 16b and a pyramidal portion 16d that are integrally formed. FIG. 14A is a perspective view of the separation claw 16 according to the first variation. FIG. 14B is a top view of the separation claw 16 according to the first variation. FIG. 14C is a rear view of the separation claw 16 according to the first variation viewed from the - Y direction. FIG. 14D is a front view of the separation claw 16 according to the first variation viewed from the + Y direction. FIG. 14E is a side view of the separation claw 16 according to the first variation viewed from the X direction.

The thickness direction of the plate 16b is substantially the same as the thickness direction of the two-ply sheet PJ. One end of the pyramidal portion 16d extends in the thickness direction of the plate 16b and intersects an end of the plate 16b that is farther from the two branched conveyance paths K4 and K5 (that is, the end of the plate 16b on the left side in FIG. 7) than another end of the plate 16b. The thickness of the pyramidal portion 16d in the thickness direction of the plate 16b gradually decreases in the direction away from the plate 16b (toward the left side in FIG. 7).

That is, in the separation claw 16 in the first variation, the left half of the substantially cross shape of the separation claw 16 in FIG. 13C is replaced with a triangle having a top toward the left side in FIG. 13C as illustrated in FIG. 14C. The left top of the separation claw 16 faces the bonding portion A of the two-ply sheet PJ and the third conveyance roller pair 6. This part is like a wedge.

The pyramidal portion 16d having a thickness extending in the thickness direction of the two-ply sheet PJ (that is the direction in which the gap C is formed) as described above can separate back ends of the two sheets P1 and P2 by at least a vertical length of the pyramidal portion 16d when the separation claws 16 enter between the two sheets P1 and P2 as illustrated in FIG. 15C. As a result, the separation claws 16 can easily guide the two sheets P1 and P2 to the two branched conveyance paths K4 and K5, respectively. That is, the function of the separation claw 16 as the divider is easily exhibited.

In particular, the pyramidal portion 16d has slopes. A length of the slope in the vertical direction (that is the direction in which the gap C is formed) gradually decreases toward the bonding portion A of the two-ply sheet PJ. Accordingly, the two sheets P1 and P2 are guided along the slopes to the two branched conveyance paths K4 and K5, respectively.

As illustrated in FIGS. 15A to 15C, the separation claws 16 in the first variation also operate in the same manner as the separation claws described with reference to FIGS. 10A to 10E.

As illustrated in FIGS. 14C and 14D, the separation claw 16 in the first variation includes a tapered portion 16d2. A length of the tapered portion 16d2 in the thickness direction of the two-ply sheet PJ (that is the vertical direction in FIGS. 14C and 14D) gradually increases outward in the width direction of the two-ply sheet PJ. The above-described configuration prevents the disadvantage that the separation claw 16 is caught by the sheet P1 or P2 when the separation claw 16 enters the gap C in the two-ply sheet PJ from the standby position as illustrated in FIG. 15A.

As illustrated in FIGS. 14B and 14E, the separation claw 16 in the first variation includes tapered portions 16b1 and 16d1. A length of each of the tapered portions 16b1 and 16d1 in the thickness direction of the two-ply sheet PJ (that is the horizontal direction in FIGS. 14B and 14E) gradually increases outward in the conveyance direction of the two-ply sheet PJ. The above-described configuration prevents the disadvantage that the separation claw 16 is caught by the bonding portion of the two-ply sheet PJ when the separation claw 16 enters into the gap C in the two-ply sheet PJ from the standby position as illustrated in FIG. 15B.

Next, a second variation is described.

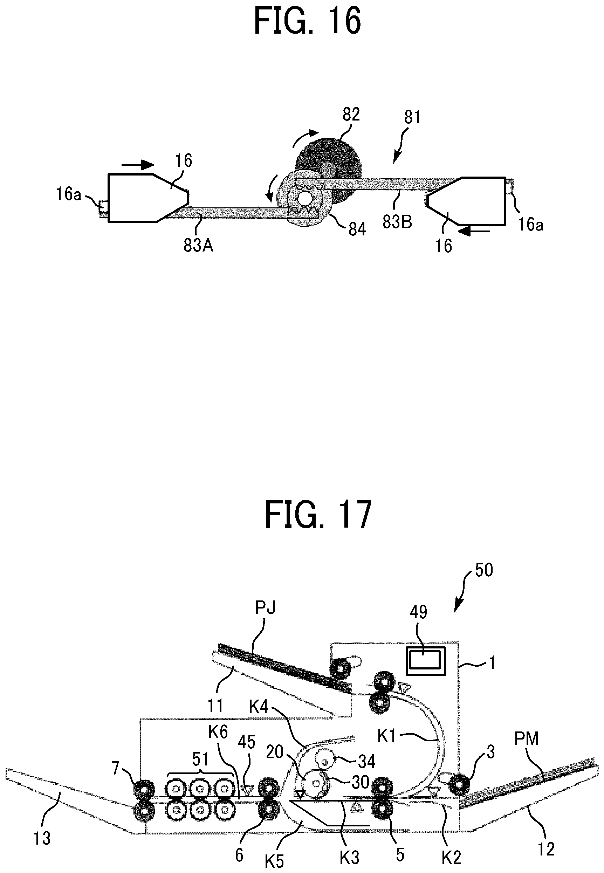

The sheet separation device according to the second variation includes a driving device 81 that moves the separation claw 16 in the width direction of the two-ply sheet PJ. As illustrated in FIG. 16, the driving device 81 in the second variation uses a pinion rack type mechanism that is different from the belt type driving device 76 in FIG. 12.

Specifically, the driving device 81 in the second variation includes a motor 82, a gear pinion 84, racks 83A and 83B. The gear pinion 84 has a step-like ring shape including a gear that meshes with a motor gear disposed on a motor shaft of the motor 82 and a pinion gear that meshes with each of rack gears of a pair of racks 83A and 83B. One separation claw 16 of the pair of separation claws 16 includes the fixed portion 16a fixed to the rack 83A, and the other separation claw 16 includes the fixed portion 16a fixed to the rack 83B.

In the driving device 81 as configured described above, the motor 82 drives to rotate the motor shaft in a direction indicated by arrow in FIG. 16 (i.e. clockwise), the gear pinion 84 rotates counterclockwise, and the pair of separation claws 16 moves from the outside portions in the width direction to the center portion in the width direction (that is, the pair of separation claws 16 approaches each other). In contrast, when the motor 82 drives to rotate the motor shaft in the direction opposite to the arrow direction in FIG. 16, the pair of separation claws 16 moves from the center portion in the width direction toward the outside portions in the width direction (that is, the pair of the separation claws 16 moves in a direction away from each other).

A third variation is described.

As illustrated in FIG. 17, a laminator 50 as the third variation includes the sheet separation device 1 illustrated in FIG. 1.

The laminator 50 includes a lamination processor 51 downstream from the third conveyance roller pair 6 in the sheet separation device 1 in the forward direction. The lamination processor 51 performs a laminating process on the two-ply sheet PJ in which the insertion sheet PM is inserted between the two sheets P1 and P2 separated by the sheet separation device 1 (that is, the normally processed two-ply sheet PJ).

The lamination processor 51 includes a plurality of heat and pressure roller pairs that apply heat and pressure to the two-ply sheet PJ while conveying, in the forward direction, the two-ply sheet PJ into which the insertion sheet PM is inserted. The fourth conveyance path K6 is disposed between the third conveyance roller pair 6 and the lamination processor 51.

As described above with reference to FIGS. 4A to 8C, the two-ply sheet PJ (into which the insertion sheet PM has been inserted after the separation operations) passes through the fourth conveyance path K6 and is conveyed to the lamination processor 51. The two-ply sheet PJ into which the insertion sheet PM is inserted inside passes through the lamination processor 51, and the entire region of the two-ply sheet PJ is joined. The two-ply sheet PJ subjected to the laminating process described above is ejected to the outside of the lamination processor 51 by an ejection roller pair 7 and is placed on the ejection tray 13.

As described above, the laminator 50 according to the third variation performs a process to feed the sheets PJ and PM, a process to separate the two sheets P1 and P2 in the two-ply sheet PJ, a process to insert the insertion sheet PM into the space between the two separated sheets P1 and P2, and a process to perform the laminating process on the two-ply sheet PJ in which the insertion sheet PM is inserted, as a sequence of processes, thus enhancing the convenience for a user.

The laminator 50 includes the operation display panel 49. When the controller determines that the abnormal state occurs based on the results detected by the abnormality detection sensor 46, the controller controls the operation display panel 49 to display that the occurrence of the abnormal state stops the separation operations and the insertion operations of the insertion sheet PM.

A fourth variation is described.

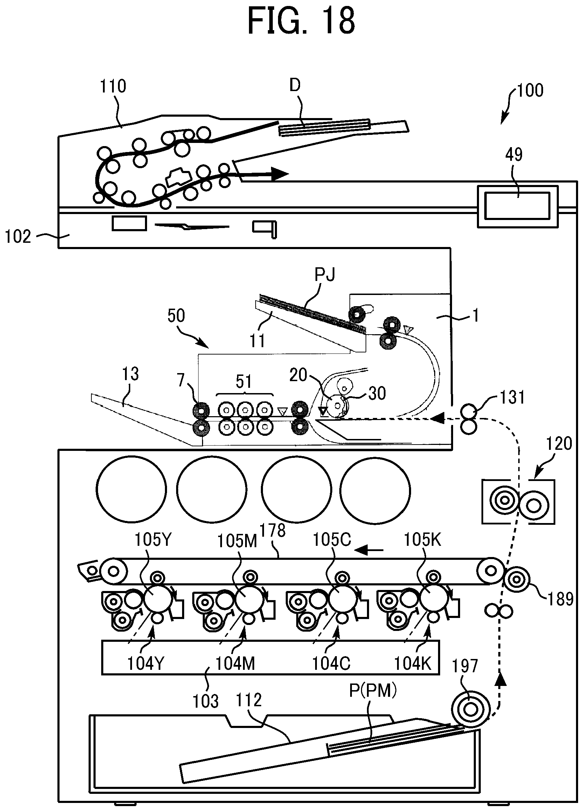

As illustrated in FIG. 18, an image forming apparatus 100 as the fourth variation includes the laminator 50 illustrated in FIG. 17 and an image forming apparatus main body that forms an image on a sheet P.

With reference to FIG. 18, in the image forming apparatus 100, multiple pairs of sheet conveying rollers disposed in the document feeder 110 feed the original document D from a document loading table and conveys the original document D in a direction indicated by arrow in FIG. 18, and the original document D passes over the document reading device 102. The document reading device 102 optically reads image data of the original document D passing over the document reading device 102. The image data optically read by the document reading device 102 is converted into electric signals and transmitted to a writing device 103.

The writing device 103 emits laser beams onto the photoconductor drums 105Y, 105M, 105C, and 105K based on the electric signals of the image data in each of colors, respectively, performing an exposure process. On the photoconductor drums 105Y, 105M, 105C, and 105K of the image forming units 104Y, 104M, 104C, and 104K, a charging process, the exposure process, and a developing process are performed to form desired images on the photoconductor drums 105Y, 105M, 105C, and 105K, respectively.

The images formed on the photoconductor drums 105Y, 105M, 105C, and 105K are transferred and superimposed onto the intermediate transfer belt 178 to form a color image. The color image formed on the intermediate transfer belt 178 is transferred to the surface of a sheet P (which is a sheet to be the insertion sheet PM) fed and conveyed by a feed roller 197 from a feeding device 112 at a position at which the intermediate transfer belt 178 faces the secondary transfer roller 189.

After the color image is transferred onto the surface of the sheet P (that is the insertion sheet PM), the sheet P is conveyed to the position of a fixing device 120. The fixing device 120 fixes the transferred color image on the sheet P.

Thereafter, the sheet P is ejected from the image forming apparatus main body of the image forming apparatus 100 by an ejection roller pair 131 and is fed into the laminator 50 as the insertion sheet PM. When the laminator 50 including the sheet separation device 1 receives the insertion sheet PM, the laminator 50 has completed the process described with reference to FIGS. 4A to 7C (that is, the process to separate the two-ply sheet PJ) and performs the process described with reference to FIGS. 8A to 8C (that is, the process to insert the insertion sheet PM into the two-ply sheet PJ) after the laminator 50 (the sheet separation device 1) receives the insertion sheet PM. After the lamination processor 51 performs the laminating process on the two-ply sheet PJ into which the insertion sheet PM is inserted, the ejection roller pair 7 ejects the two-ply sheet PJ to the outside of the lamination processor 51 to place the two-ply sheet PJ on the ejection tray 13.

As described above, a series of image formation processes (i.e. printing operations) in the image forming apparatus 100 and a series of sheet separation processes and the laminating process using the insertion sheet PM on which the image is formed are completed.

In the fourth variation, the image forming apparatus 100 includes the laminator 50, but may include the sheet separation device 1 illustrated in FIG. 1.

The image forming apparatus 100 includes the operation display panel 49. When the controller determines that the abnormal state occurs based on the results detected by the abnormality detection sensor 46, the controller controls the operation display panel 49 to display that the occurrence of the abnormal state stops the separation operations and the insertion operations of the insertion sheet PM.

The image forming apparatus 100 according to the fourth variation is a color image forming apparatus but may be a monochrome image forming apparatus. The image forming apparatus 100 according to the fourth variation employs electrophotography, but the present disclosure is not limited to this. The present disclosure may be applied to other types of image forming apparatuses such as an inkjet image forming apparatus and a stencil printing machine.

A fifth variation is described.

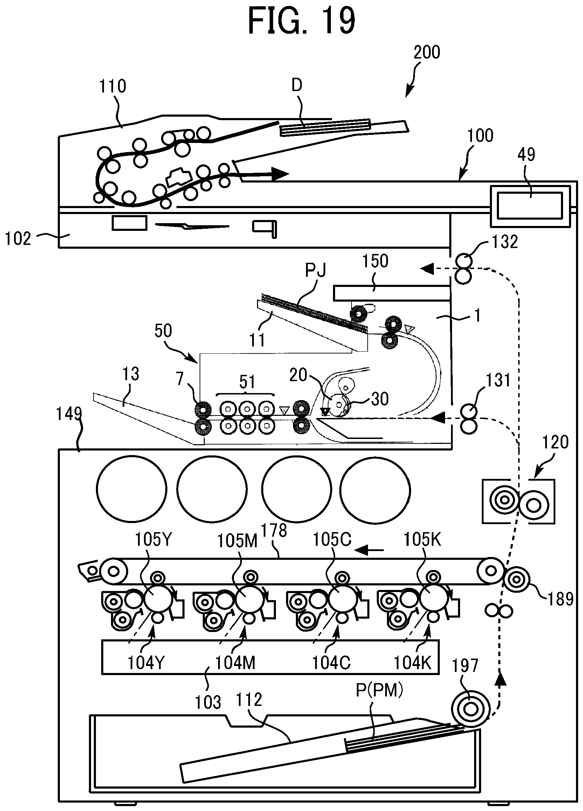

As illustrated in FIG. 19, an image forming system 200 according to the fifth variation includes the image forming apparatus 100 illustrated in FIG. 18 that forms the image on the sheet P and the laminator 50 illustrated in FIG. 17, and the laminator 50 is detachably attached to the image forming apparatus 100.

In the image forming system 200 illustrated in FIG. 19, the image forming apparatus 100 performs the image formation described above with reference to FIG. 17 and ejects the sheet P (that is the insertion sheet formed a desired image) from the ejection roller pair 131 to the laminator 50, and the laminator 50 performs the laminating process on the two-ply sheet PJ into which the insertion sheet PM has been inserted, and the ejection roller pair 7 ejects the two-ply sheet PJ to the outside of the laminator 50 to place the two-ply sheet PJ on the ejection tray 13.

When such a laminating process is not performed, the image forming apparatus 100 in the image forming system 200 ejects the sheet P formed the image by the image formation process from a second ejection roller pair 132 to the outside of the image forming apparatus 100 to place the sheet P on a second ejection tray 150.

The laminator 50 is detachably attached to the image forming apparatus 100 and can be detached from the image forming apparatus 100 when the laminator 50 is not necessary. The image forming apparatus 100 from which the laminator 50 is detached uses a placement surface 149 to place the laminator 50 as an ejection tray to place the sheet P formed the image by the image formation process and ejected from the ejection roller pair 131 to the outside of the image forming apparatus 100.

In the fifth variation, the image forming system 200 includes the detachable laminator 50. However, the image forming system 200 may include the sheet separation device 1 illustrated in FIG. 1 detachable.

The image forming system 200 includes the operation display panel 49. When the controller determines that the abnormal state occurs based on the results detected by the abnormality detection sensor 46, the controller controls the operation display panel 49 to display that the occurrence of the abnormal state stops the separation operations and the insertion operations of the insertion sheet PM.

As described above, the sheet separation device 1 according to the present embodiment separates the non-bonding portion of the two-ply sheet PJ in which the two sheets P1 and P2 are overlapped and bonded at one end as the bonding portion A and includes the separation claws 16 as the separator that are inserted into the gap C formed between the two sheets P1 and P2 of the two-ply sheet PJ at a predetermined positions. The separation claws 16 guide the two sheets P1 and P2 separated by the separation claws 16 to the two branched conveyance paths K4 and K5 that branch off in different directions, respectively.

Thus, without increasing the size of the sheet separation device 1, the above-described mechanism can satisfactorily and efficiently separate the two sheets P1 and P2 constituting the two-ply sheet PJ.

In the present embodiment of the present disclosure, the two branched conveyance paths K4 and K5 branch off in different directions from the third conveyance path K3 between the separation claws 16 as the separator and the winding roller 20. In other words, the third conveyance path K3 is interposed by the two branched conveyance paths K4 and K5. Alternatively, the two branched conveyance paths K4 and K5 may branch off at the position of the separation claws 16 as the separator in different directions from the third conveyance path K3 interposed by the two branched conveyance paths K4 and K5.

The present disclosure is not limited to the above-described embodiment and variations, and the configuration of the present embodiment can be appropriately modified other than suggested in the above embodiment and variations within a scope of the technological concept of the present disclosure. The number, position, and shape of the components described above are not limited to those embodiments described above. Desirable number, position, and shape can be determined to perform the present disclosure.

In the present disclosure, the "end surface" of the two-ply sheet is defined as a side surface extending in the thickness direction and connecting the front surface and the back surface of the two-ply sheet. Accordingly, there are four end surfaces of the rectangular two-ply sheet on the front, back, left, and right.

The above-described embodiments are illustrative and do not limit this disclosure. Thus, numerous additional modifications and variations are possible in light of the above teachings. For example, elements at least one of features of different illustrative and exemplary embodiments herein may be combined with each other at least one of substituted for each other within the scope of this disclosure and appended claims. The number, position, and shape of the components described above are not limited to those embodiments described above. Desirable number, position, and shape can be determined to perform the present disclosure.

## Claims

1. A sheet separation device (1) configured to separate a non-bonding portion (B) of a two-ply sheet (PJ) in which two sheets (P1, P2) are overlapped and bonded together at one end (A) as a bonding portion (A) of the two-ply sheet (PJ), **characterized in that** the sheet separation device (1) comprises a separator (16) configured to be inserted into a gap (C) formed between the two sheets (P 1, P2) of the two-ply sheet (PJ), separate the two sheets (P 1, P2), and guide the two sheets (P1, P2) in two different directions, respectively.

2. The sheet separation device (1) according to claim 1, further comprising:
a winding roller (20) configured to rotate and wind the two-ply sheet (PJ); and
a conveyance roller pair (6) configured to convey the two-ply sheet (PJ) toward the winding roller (20) with another end (B) of the two-ply sheet (PJ) as a front end, said another end (B) opposite the one end (A), in a conveyance path (K3) between the winding roller (20) and the conveyance roller pair (6),
wherein the gap (C) is formed between the two sheets (P1, P2) of the two-ply sheet (PJ) between the winding roller (20) and the conveyance roller pair (6), and the two-ply sheet (PJ) has said another end (B) wound around the winding roller (20) and the one end (A) nipped by the conveyance roller pair (6), and
wherein the two branched conveyance paths (K4, K5) branch off at a position of the separator (16) or a position between the separator (16) and the winding roller (20) in different directions from the conveyance path (K3) interposed between the two branched conveyance paths (K4, K5).

3. The sheet separation device (1) according to claim 1 or claim 2, further comprising two branched conveyance paths (K4, K5) to which the two sheets (P1, P2) are guided in the different directions.

4. The sheet separation device (1) according to claim 3, further comprising
another conveyance roller pair (5) configured to convey and insert an insertion sheet (PM) into a space between the two sheets (P1, P2) separated by the separator (16),
wherein the conveyance roller pair (6) is configured to convey the two-ply sheet (PJ), after the separator (16) is inserted into the gap (C), to release said another end (B) of the two-ply sheet (PJ) wound around the winding roller (20) from the winding roller (20) and subsequently convey the two-ply sheet (PJ) toward the winding roller (20),
wherein the separator (16) is configured to guide the two sheets (P1, P2) separated by the separator (16) to the two branched conveyance paths (K4, K5), respectively, and
wherein said another conveyance roller pair (5) is configured to convey the insertion sheet (PM) toward the one end (A) of the two-ply sheet (PJ) in the conveyance path (K3) and insert the insertion sheet (PM) between the two sheets (P1, P2) separated.

5. The sheet separation device (1) according to any one of claims 2 to 4, further comprising:
a receiving portion (20b) of the winding roller (20);
a gripper (32) configured to grip said another end (B) of the two-ply sheet (PJ) as a gripped portion (B) with the receiving portion (20b); and
a moving mechanism (30) configured to move the gripper (32) between a gripping position at which the gripper (32) grips the two-ply sheet (PJ) and a releasing position at which the gripper (32) is released from the gripping position.

6. The sheet separation device (1) according to any one of claims 1 to 5,
wherein the separator (16) includes a tapered portion (16c1) having a length in a thickness direction of the two-ply sheet (PJ), the length gradually increasing outward in a width direction of the two-ply sheet (PJ).

7. The sheet separation device (1) according to any one of claims 1 to 6,
wherein the separator (16) includes a tapered portion (16b 1) having a length in a conveyance direction of the two-ply sheet (PJ), the length gradually increasing outward in a width direction of the two-ply sheet (PJ).

8. The sheet separation device (1) according to any one of claims 1 to 7,
wherein the separator (16) includes
a first plate (16b) having a thickness direction that is same as a thickness direction of the two-ply sheet (PJ) and
a second plate (16c) intersecting the first plate (16b) in the thickness direction.

9. The sheet separation device (1) according to any one of claims 3 to 7,
wherein the separator (16) includes
a plate (16b) having a thickness direction that is same as a thickness direction of the two-ply sheet (PJ) and
a pyramidal portion (16d) intersecting an end of the plate (16b) that is farther from the two branched conveyance paths (K4, K5) than another end of the plate (16b),
wherein a thickness of the pyramidal portion (16d) in the thickness direction of the plate (16b) gradually decreases in a direction away from the plate (16b).

10. The sheet separation device (1) according to any one of claims 1 to 9,
wherein the separator (16) is configured to move in a width direction of the two-ply sheet (PJ) between the two sheets (P1, P2) at another end (B) of the two-ply sheet (PJ) opposite the one end (A), after the separator (16) is inserted into the gap (C) in the two-ply sheet (PJ), and relatively move from the one end (A) of the two-ply sheet (PJ) to said another end (B) of the two-ply sheet (PJ).

11. The sheet separation device (1) according to claim 10,
wherein the separator (16) is one of a pair of separators (16), and
wherein the pair of separators (16) is configured to move from both ends of the two-ply sheet (PJ) in the width direction of the two-ply sheet (PJ) to a center portion of the two-ply sheet (PJ) in the width direction of the two-ply sheet (PJ) between the two sheets (P1, P2) at said another end (B) of the two-ply sheet (PJ) after the pair of separators (16) is inserted into both ends of the gap (C) in the width direction of the two-ply sheet (PJ) and relatively moves from the one end (A) of the two-ply sheet (PJ) to said another end (B) of the two-ply sheet (PJ).

12. A laminator (50) comprising:
the sheet separation device (1) according to any one of claims 1 to 11; and
a lamination processor (51) configured to perform a laminating process on the two-ply sheet (PJ) including an insertion sheet (PM) inserted between the two sheets (P1, P2) separated by the sheet separation device (1).

13. An image forming apparatus (100) comprising:
one of the sheet separation device (1) according to any one of claims 1 to 11 and the laminator (50) according to claim 12; and
an image forming apparatus main body configured to form an image on a sheet.

14. An image forming system (200) comprising:
An image forming apparatus (100) configured to form an image on a sheet; and
one of the sheet separation device (1) according to any one of claims 1 to 11 detachably attached to the image forming apparatus (100) and the laminator (50) according to claim 12 detachably attached to the image forming apparatus (100).

## Patentansprüche

1. Blatttrennvorrichtung (1), die dafür konfiguriert ist, einen nicht bindenden Abschnitt (B) eines zweilagigen Blatts (PJ) zu trennen, bei dem zwei Blätter (P1, P2) überlappt und an einem Ende (A) als bindender Abschnitt (A) des zweilagigen Blatts (PJ) miteinander verbunden sind, **dadurch gekennzeichnet, dass** die Blatttrennvorrichtung (1) Folgendes umfasst:
eine Trenneinrichtung (16), die dafür konfiguriert ist, in einen zwischen den beiden Blättern (P1, P2) des zweilagigen Blattes (PJ) gebildeten Spalt (C) eingesetzt zu werden, die beiden Blätter (P1, P2) zu trennen und die beiden Blätter (P1, P2) jeweils in zwei unterschiedliche Richtungen zu führen.

2. Blatttrennvorrichtung (1) nach Anspruch 1, die ferner Folgendes umfasst:
eine Wickelwalze (20), die dafür konfiguriert ist, das zweilagige Blatt (PJ) zu drehen und aufzuwickeln; und
ein Förderwalzenpaar (6), das dafür konfiguriert ist, das zweilagige Blatt (PJ) in Richtung der Wickelwalze (20) mit einem anderen Ende (B) des zweilagigen Blatts (PJ) als einem vorderen Ende, wobei das andere Ende (B) dem einen Ende (A) gegenüberliegt, in einem Förderweg (K3) zwischen der Wickelwalze (20) und dem Förderwalzenpaar (6) zu fördern,
wobei der Spalt (C) zwischen den beiden Blättern (P1, P2) des zweilagigen Blatts (PJ) zwischen der Wickelwalze (20) und dem Förderwalzenpaar (6) gebildet ist und das zweilagige Blatt (PJ) mit dem anderen Ende (B) um die Wickelwalze (20) gewickelt und mit dem einen Ende (A) von dem Förderwalzenpaar (6) eingeklemmt ist, und
wobei die beiden verzweigten Förderwege (K4, K5) an einer Position der Trenneinrichtung (16) oder einer Position zwischen der Trenneinrichtung (16) und der Wickelwalze (20) in unterschiedlichen Richtungen von dem zwischen den beiden verzweigten Förderwegen (K4, K5) liegenden Förderweg (K3) abzweigen.

3. Blatttrennvorrichtung (1) nach Anspruch 1 oder Anspruch 2, die ferner zwei verzweigte Förderwege (K4, K5) umfasst, zu denen die beiden Blätter (P1, P2) in den unterschiedlichen Richtungen geführt werden.

4. Blatttrennvorrichtung (1) nach Anspruch 3, die ferner Folgendes umfasst:
ein weiteres Förderwalzenpaar (5), das zum Fördern und Einlegen eines Einlegeblattes (PM) in einen Raum zwischen den beiden durch die Trenneinrichtung (16) getrennten Blättern (P1, P2) konfiguriert ist,
wobei das Förderwalzenpaar (6) dafür konfiguriert ist, die zweilagige Blatt (PJ) zu befördern, nachdem die Trenneinrichtung (16) in den Spalt (C) eingeführt ist, um das andere Ende (B) des um die Wickelwalze (20) gewickelten zweilagigen Blatts (PJ) von der Wickelwalze (20) freizugeben und anschließend das zweilagige Blatt (PJ) zur Wickelwalze (20) zu befördern,
wobei die Trenneinrichtung (16) dafür konfiguriert ist, die beiden durch die Trenneinrichtung (16) getrennten Blätter (P1, P2) jeweils zu den beiden verzweigten Förderwegen (K4, K5) zu führen, und
wobei das andere Förderwalzenpaar (5) dafür konfiguriert ist, das Einlegeblatt (PM) in Richtung des einen Endes (A) des zweilagigen Blattes (PJ) im Förderweg (K3) zu befördern und das Einlegeblatt (PM) zwischen die beiden getrennten Blätter (P1, P2) einzuführen.

5. Blatttrennvorrichtung (1) nach einem der Ansprüche 2 bis 4, die ferner Folgendes umfasst:
einen aufnehmenden Abschnitt (20b) der Wickelwalze (20);
einen Greifer (32), der dafür konfiguriert ist, das andere Ende (B) des zweilagigen Blatts (PJ) als gegriffenen Abschnitt (B) mit dem Aufnahmeabschnitt (20b) zu greifen; und
einen Bewegungsmechanismus (30), der dafür konfiguriert ist, den Greifer (32) zwischen einer Greifposition, in der der Greifer (32) das zweilagige Blatt (PJ) ergreift, und einer Freigabeposition, in der der Greifer (32) aus der Greifposition freigegeben wird, zu bewegen.

6. Blatttrennvorrichtung (1) nach einem der Ansprüche 1 bis 5,
wobei die Trenneinrichtung (16) einen sich verjüngenden Abschnitt (16c1) aufweist, der eine Länge in einer Dickenrichtung des zweilagigen Blattes (PJ) aufweist, wobei die Länge in einer Breitenrichtung des zweilagigen Blattes (PJ) allmählich nach außen zunimmt.

7. Blatttrennvorrichtung (1) nach einem der Ansprüche 1 bis 6,
wobei die Trenneinrichtung (16) einen sich verjüngenden Abschnitt (16b1) aufweist, der eine Länge in einer Förderrichtung des zweilagigen Blattes (PJ) aufweist, wobei die Länge in einer Breitenrichtung des zweilagigen Blattes (PJ) allmählich nach außen zunimmt.

8. Blatttrennvorrichtung (1) nach einem der Ansprüche 1 bis 7,
wobei die Trenneinrichtung (16) Folgendes enthält:
eine erste Platte (16b), deren Dickenrichtung mit der Dickenrichtung des zweilagigen Blattes (PJ) übereinstimmt, und
eine zweite Platte (16c), die die erste Platte (16b) in der Dickenrichtung schneidet.

9. Blatttrennvorrichtung (1) nach einem der Ansprüche 3 bis 7,
wobei die Trenneinrichtung (16) Folgendes enthält:
eine Platte (16b), deren Dickenrichtung mit der Dickenrichtung des zweilagigen Blattes (PJ) übereinstimmt, und
einen pyramidenförmigen Abschnitt (16d), der ein Ende der Platte (16b) schneidet, das weiter von den beiden verzweigten Förderwegen (K4, K5) entfernt ist als ein anderes Ende der Platte (16b),
wobei eine Dicke des pyramidenförmigen Abschnitts (16d) in der Dickenrichtung der Platte (16b) allmählich in einer Richtung weg von der Platte (16b) abnimmt.

10. Blatttrennvorrichtung (1) nach einem der Ansprüche 1 bis 9,
wobei die Trenneinrichtung (16) dafür konfiguriert ist, sich in einer Breitenrichtung des zweilagigen Blattes (PJ) zwischen den beiden Blättern (P1, P2) an einem anderen Ende (B) des zweilagigen Blattes (PJ) gegenüber dem einen Ende (A) zu bewegen, nachdem die Trenneinrichtung (16) in den Spalt (C) in dem zweilagigen Blatt (PJ) eingeführt ist, und sich relativ von dem einen Ende (A) des zweilagigen Blattes (PJ) zu dem anderen Ende (B) des zweilagigen Blattes (PJ) zu bewegen.

11. Blatttrennvorrichtung (1) nach Anspruch 10,
wobei die Trenneinrichtung (16) eine eines Paares von Trenneinrichtungen (16) ist, und
wobei das Paar von Trenneinrichtungen (16) dafür konfiguriert ist, sich von beiden Enden des zweilagigen Blattes (PJ) in Breitenrichtung des zweilagigen Blattes (PJ) zu einem mittleren Abschnitt des zweilagigen Blattes (PJ) in Breitenrichtung des zweilagigen Blattes (PJ) zwischen den beiden Blättern (P1, P2) an dem anderen Ende (B) des zweilagigen Blattes (PJ) zu bewegen nachdem das Paar von Trenneinrichtungen (16) in beide Enden des Spaltes (C) in der Breitenrichtung des zweilagigen Blattes (PJ) eingeführt ist und sich relativ von dem einen Ende (A) des zweilagigen Blattes (PJ) zu dem anderen Ende (B) des zweilagigen Blattes (PJ) bewegt.

12. Laminator (50), der folgendes umfasst:
die Blatttrennvorrichtung (1) nach einem der Ansprüche 1 bis 11; und
einen Laminierprozessor (51), der dafür konfiguriert ist, einen Laminiervorgang an dem zweilagigen Blatt (PJ) durchzuführen, der ein Einlegeblatt (PM) enthält, das zwischen die beiden durch die Blatttrennvorrichtung (1) getrennten Blätter (P1, P2) eingelegt ist.

13. Bilderzeugungsgerät (100), das Folgendes umfasst:
entweder die Blatttrennvorrichtung (1) nach einem der Ansprüche 1 bis 11 oder die Laminiervorrichtung (50) nach Anspruch 12; und
einen Hauptkörper des Bilderzeugungsgeräts, der dafür konfiguriert ist, ein Bild auf einem Blatt zu erzeugen.

14. Bilderzeugungssystem (200), das Folgendes umfasst:
ein Bilderzeugungsgerät (100), das zum Erzeugen eines Bildes auf einem Blatt konfiguriert ist; und
entweder die Blatttrennvorrichtung (1) nach einem der Ansprüche 1 bis 11, die abnehmbar an dem Bilderzeugungsgerät (100) angebracht ist, oder die Laminiervorrichtung (50) nach Anspruch 12, die abnehmbar an dem Bilderzeugungsgerät (100) angebracht ist.

## Revendications

1. Dispositif de séparation de feuilles (1) configuré pour séparer une partie non liante (B) d'une feuille à deux plis (PJ) dans laquelle deux feuilles (P1, P2) sont superposées et collées ensemble à une première extrémité (A) comme partie de liaison (A) de la feuille à deux plis (PJ), **caractérisé en ce que** le dispositif de séparation de feuilles (1) comprend un séparateur (16) configuré pour être inséré dans un espace (C) formé entre les deux feuilles (P1, P2) de la feuille à deux plis (PJ), séparer les deux feuilles (P1, P2) et guider les deux feuilles (P1, P2) dans deux directions différentes, respectivement.

2. Dispositif de séparation de feuilles (1) selon la revendication 1, comprenant en outre :
un rouleau d'enroulement (20) configuré pour faire tourner et enrouler la feuille à deux plis (PJ) ; et
une paire de rouleaux de transport (6) configurée pour transporter la feuille à deux plis (PJ) vers le rouleau d'enroulement (20) avec une autre extrémité (B) de la feuille à deux plis (PJ) comme extrémité avant, ladite autre extrémité (B) étant à l'opposé de la première extrémité (A), dans un chemin de transport (K3) entre le rouleau d'enroulement (20) et la paire de rouleaux de transport (6),
dans lequel l'espace (C) est formé entre les deux feuilles (P1, P2) de la feuille à deux plis (PJ) entre le rouleau d'enroulement (20) et la paire de rouleaux de transport (6), et la feuille à deux plis (PJ) a ladite autre extrémité (B) enroulée autour du rouleau d'enroulement (20) et la première extrémité (A) pincée par la paire de rouleaux de transport (6), et
dans lequel les deux chemins de transport ramifiés (K4, K5) bifurquent à une position du séparateur (16) ou à une position entre le séparateur (16) et le rouleau d'enroulement (20) dans des directions différentes du chemin de transport (K3) interposé entre les deux chemins de transport ramifiés (K4, K5).

3. Dispositif de séparation de feuilles (1) selon la revendication 1 ou la revendication 2, comprenant en outre deux chemins de transport ramifiés (K4, K5) vers lesquels les deux feuilles (P1, P2) sont guidées dans des directions différentes.

4. Dispositif de séparation de feuilles (1) selon la revendication 3, comprenant en outre une autre paire de rouleaux de transport (5) configurée pour transporter et insérer une feuille d'insertion (PM) dans un espace entre les deux feuilles (P1, P2) séparées par le séparateur (16), dans lequel la paire de rouleaux de transport (6) est configurée pour transporter la feuille à deux plis (PJ), après que le séparateur (16) est inséré dans l'espace (C), pour libérer ladite autre extrémité (B) de la feuille à deux plis (PJ) enroulée autour du rouleau d'enroulement (20) du rouleau d'enroulement (20) et transporter ensuite la feuille à deux plis (PJ) vers le rouleau d'enroulement (20),
dans lequel le séparateur (16) est configuré pour guider les deux feuilles (P1, P2) séparées par le séparateur (16) vers les deux chemins de transport ramifiés (K4, K5), respectivement, et
dans lequel ladite autre paire de rouleaux de transport (5) est configurée pour transporter la feuille d'insertion (PM) vers l'extrémité (A) de la feuille à deux plis (PJ) dans le chemin de transport (K3) et insérer la feuille d'insertion (PM) entre les deux feuilles (P1, P2) séparées.

5. Dispositif de séparation de feuilles (1) selon l'une quelconque des revendications 2 à 4, comprenant en outre :
une partie de réception (20b) du rouleau d'enroulement (20) ;
une pince (32) configurée pour saisir ladite autre extrémité (B) de la feuille à deux plis (PJ) en tant que partie saisie (B) avec la partie de réception (20b) ; et
un mécanisme de déplacement (30) configuré pour déplacer la pince (32) entre une position de préhension à laquelle la pince (32) saisit la feuille à deux plis (PJ) et une position de libération à laquelle la pince (32) est libérée de la position de préhension.

6. Dispositif de séparation de feuilles (1) selon l'une quelconque des revendications 1 à 5, dans lequel le séparateur (16) comprend une partie conique (16c1) ayant une longueur dans une direction d'épaisseur de la feuille à deux plis (PJ), la longueur augmentant progressivement vers l'extérieur dans la direction de la largeur de la feuille à deux plis (PJ).

7. Dispositif de séparation de feuilles (1) selon l'une quelconque des revendications 1 à 6, dans lequel le séparateur (16) comprend une partie conique (16b1) ayant une longueur dans une direction de transport de la feuille à deux plis (PJ), la longueur augmentant progressivement vers l'extérieur dans la direction de la largeur de la feuille à deux plis (PJ).

8. Dispositif de séparation de feuilles (1) selon l'une quelconque des revendications 1 à 7, dans lequel le séparateur (16) comprend
une première plaque (16b) ayant une direction d'épaisseur qui est la même qu'une direction d'épaisseur de la feuille à deux plis (PJ) et
une seconde plaque (16c) coupant la première plaque (16b) dans la direction de l'épaisseur.

9. Dispositif de séparation de feuilles (1) selon l'une quelconque des revendications 3 à 7, dans lequel le séparateur (16) comprend
une plaque (16b) ayant une direction d'épaisseur qui est la même qu'une direction d'épaisseur de la feuille à deux plis (PJ) et
une partie pyramidale (16d) coupant une extrémité de la plaque (16b) qui est plus éloignée des deux chemins de transport ramifiés (K4, K5) qu'une autre extrémité de la plaque (16b),
une épaisseur de la partie pyramidale (16d) dans la direction de l'épaisseur de la plaque (16b) diminue progressivement dans une direction s'éloignant de la plaque (16b).

10. Dispositif de séparation de feuilles (1) selon l'une quelconque des revendications 1 à 9, dans lequel le séparateur (16) est configuré pour se déplacer dans la direction de la largeur de la feuille à deux plis (PJ) entre les deux feuilles (P1, P2) à une autre extrémité (B) de la feuille à deux plis (PJ) opposée à la première extrémité (A), après l'insertion du séparateur (16) dans l'espace (C) de la feuille à deux plis (PJ), et se déplacer relativement de la première extrémité (A) de la feuille à deux plis (PJ) à ladite autre extrémité (B) de la feuille à deux plis (PJ).

11. Dispositif de séparation de feuilles (1) selon la revendication 10,
dans lequel le séparateur (16) fait partie d'une paire de séparateurs (16), et
dans lequel la paire de séparateurs (16) est configurée pour se déplacer des deux extrémités de la feuille à deux plis (PJ) dans la direction de la largeur de la feuille à deux plis (PJ) à une partie centrale de la feuille à deux plis (PJ) la direction de la largeur de la feuille à deux plis (PJ) entre les deux feuilles ( P1, P2) à ladite autre extrémité (B) de la feuille à deux plis (PJ) après que la paire de séparateurs (16) a été insérée dans les deux extrémités de l'espace (C) dans la direction de la largeur de la feuille à deux plis ( PJ) et se déplacer relativement de la première extrémité (A) de la feuille à deux plis (PJ) à ladite autre extrémité (B) de la feuille à deux plis (PJ).

12. Lamineur (50) comprenant :
le dispositif de séparation de feuilles (1) selon l'une quelconque des revendications 1 à 11 ; et
un processeur de stratification (51) configuré pour effectuer un processus de stratification sur la feuille à deux plis (PJ) comprenant une feuille d'insertion (PM) insérée entre les deux feuilles (P1, P2) séparées par le dispositif de séparation de feuilles (1).

13. Appareil de formation d'image (100) comprenant :
l'un parmi le dispositif de séparation de feuilles (1) selon l'une quelconque des revendications 1 à 11 et le lamineur (50) selon la revendication 12 ; et
un corps principal d'appareil de formation d'image configuré pour former une image sur une feuille.

14. Système de formation d'image (200) comprenant :
un appareil de formation d'image (100) configuré pour former une image sur une feuille ; et
l'un parmi le dispositif de séparation de feuilles (1) selon l'une quelconque des revendications 1 à 11 fixé de façon amovible à l'appareil de formation d'image (100) et le lamineur (50) selon la revendication 12 fixé de façon amovible à l'appareil de formation d'image (100).
